(19) Europäisches Patentamt
European Patent Office
Office européen des brevets

(11) **EP 4 716 093 A1**

(12) **EUROPEAN PATENT APPLICATION**
published in accordance with Art. 153(4) EPC

(43) Date of publication:
**25.03.2026 Bulletin 2026/13**

(21) Application number: **24806997.3**

(22) Date of filing: **23.04.2024**

(51) International Patent Classification (IPC):
*H02P 27/06* (2006.01)    *H02P 29/60* (2016.01)

(52) Cooperative Patent Classification (CPC):
**H02P 27/06; H02P 29/60**

(86) International application number:
**PCT/JP2024/015930**

(87) International publication number:
**WO 2024/237043 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023080088**

(71) Applicant: **DENSO CORPORATION**
**Kariya-city, Aichi 448-8661 (JP)**

(72) Inventors:
• **WASHIO, Sho**
**Nisshin-city, Aichi 4700111 (JP)**
• **KAZAOKA, Ryoya**
**Kariya-city, Aichi 4488661 (JP)**
• **HASHIZUME, Ryoya**
**Nisshin-city, Aichi 4700111 (JP)**

(74) Representative: **TBK**
**Bavariaring 4-6**
**80336 München (DE)**

(54) **CONTROL DEVICE AND CONTROL PROGRAM FOR ROTARY ELECTRIC MACHINE SYSTEM**

(57)     A control device (40) is applied to a motor system including a motor (10) having polyphase windings (11) and an inverter (20) that adjusts a phase-current in a winding of each phase by turning on and off a plurality of switches (21, 22). Each of the switches being a semiconductor switching device. The control device controls each of the plurality of switches. The control device includes: a determination unit configured to determine whether there is a heat generation request in the motor system, and a switch control unit configured to turn on and off the plurality of switches respectively. When it is determined that there is the heat generation request, the switch control unit causes at least one of: (1) a transition time for turning on each of the plurality of switches; and (2) a transition time for turning off each of the plurality of switches, to be longer than when it is determined that there is no heat generation request.

FIG.1

**Description**

[CROSS-REFERENCE TO RELATED APPLICATIONS]

This application is based on Japanese Application No. 2023-080088 filed on May 15, 2023. The contents of this application is incorporated herein by reference in their entirety.

[TECHNICAL FIELD]

The present disclosure relates to a motor system control device and a control program.

[BACKGROUND ART]

As described in Patent Document 1, a control device for controlling an inverter that electrically connects windings constituting a motor and a battery is known. The control device alternately repeats discharge control, which applies d-axis voltage via an inverter switching control to flow d-axis current to the motor when the battery is cold and the motor is stationary, and charge control, which subsequently lowers the d-axis voltage to return electrical energy from the motor coils to the battery. This causes the control device to generate Joule heat in the battery, thereby warming it.

[Prior Art Documents]

[Patent Documents]

[Patent Document 1] JP5849917B2

[SUMMARY OF INVENTION]

In vehicles, there are various thermal demands besides the heat required for battery warming, such as cabin heating. Therefore, by effectively generating heat at each switch of the inverter installed in the vehicle, it is possible to meet these various thermal demands. There is room for improvement in the technology for causing the inverter to perform heat generation according to the thermal demand.
This disclosure aims to provide a motor system control device and a control program that can efficiently perform heat generation in a motor system.
According to one aspect of this disclosure, a control device controls each of a plurality of switches in an inverter. The control device is applied to a motor system. The motor system includes: a motor having polyphase windings, and an inverter that adjusts a phase-current in a winding of each phase by turning on and off a plurality of switches. Each of the switches is a semiconductor switching device. The control device includes: a determination unit configured to determine whether there is a heat generation request in the motor system, and a switch control unit configured to turn on and off the plurality of switches respectively. When it is determined that there is the heat generation request, the switch control unit causes at least one of a transition time for turning on each of the plurality of switches, and a transition time for turning off each of the plurality of switches, to be longer than when it is determined that there is no heat generation request.
When it is determined that there is the heat generation request, the control device causes at least one of a transition time for turning on each of the plurality of switches, and a transition time for turning off each of the plurality of switches, to be longer than when it is determined that there is no heat generation request. This enables heat generation due to an increase in a switching-loss at each switch of the inverter. As a result, efficient heat generation can be performed in the motor system.
"Heat generation" means generating heat, and a "heat generation request" means requiring heat generation.

[BRIEF DESCRIPTION OF DRAWINGS]

The above objectives and other objectives, features, and advantages of the present disclosure will become clearer through the following detailed description with reference to the accompanying drawings. These drawings are as follows:

Fig. 1 is a general configuration diagram of a motor system;
Fig. 2 is a diagram showing the configuration of a switch drive circuit;
Fig. 3 is a time chart showing the changes in switch voltage Vsw and switch current Isw;
Fig. 4 is a time chart showing the rise of device temperature when the switch is on;

Fig. 5 is a diagram showing the processing of a dq-UVW conversion;

Fig. 6 is a time chart showing current waveforms of the dq-axis current and the phase-currents of each phase;

Fig. 7 is a diagram showing a switching pattern when a heat generation operation is performed by d-axis energization;

Fig. 8 is a diagram showing the switching pattern when the heat generation operation is performed by the d-axis energization;

Fig. 9 is a time chart showing gate voltage transition at upper and lower arm switches;

Fig. 10 is a time chart showing an example of controlling gate resistance switching in each phase;

Fig. 11 shows the relationship between an electrical angle and a current ratio for each phase.

Fig. 12 is a timing chart showing switching controls for three states with different modulation rates;

Fig. 13 is a diagram showing the processing of the dq-UVW conversion;

Fig. 14 is a time chart for specifically explaining heat generation operation by the d-axis energization;

Fig. 15 is a flowchart showing a procedure of the heat generation operation when the vehicle is stationary;

Fig. 16 is a flowchart showing a procedure of the heat generation operation while the vehicle is travelling;

Fig. 17 is a diagram showing the relationship between a device temperature and a switching-loss increasing period;

Fig. 18 is a diagram showing the meshing in a gear mechanism;

Fig. 19 is a time chart showing changes in various parameters when generating q-axis torque;

Fig. 20 is a flowchart showing a procedure of the heat generation operation when the vehicle is stationary;

Fig. 21 is a time chart showing a transition of the gate voltage at the upper and lower arm switches;

Fig. 22 is a diagram showing a configuration for changing a dead time according to heat generation request.

[DESCEIPTION OF EMBODIMENTS]

(First Embodiment)

A motor system in this embodiment is described with reference to the drawings. The motor system of this embodiment is installed in electric vehicles such as battery electric vehicles (BEVs) and hybrid electric vehicles (HEVs).

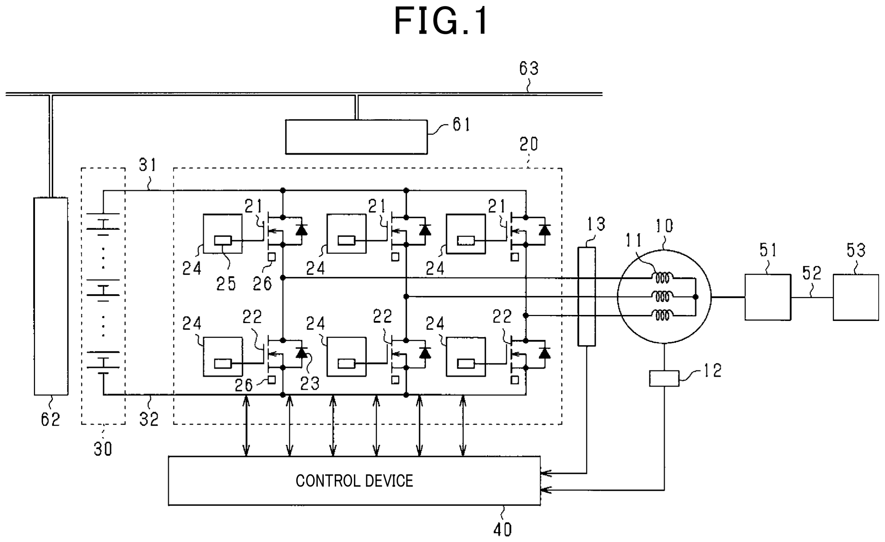

As shown in Figure 1, the motor system includes a motor 10, an inverter 20 which is a power converter, a battery 30 which is a high-voltage power source, and a control device 40. The motor 10 may be a brushless synchronous motor. The motor 10 may be a permanent magnet synchronous motor. The motor 10 includes a rotor (not shown) and stator windings including three-phase coils 11 (U-phase, V-phase, W-phase). The coils 11 are configured with the U-phase coil, V-phase coil, and W-phase coil connected in a star configuration. The motor 10 has a rotation angle sensor 12 for detecting a rotation angle (an electrical angle) of the rotor and a phase-current sensor 13 for detecting the phase-current flowing through each phase of the coils 11. A phase-current sensor 13 may be provided for each of the three phases or may be provided for only two of the three phases.

The motor 10 is provided as a power source for the vehicle's travelling. Rotation of the rotor of the motor 10 causes wheels to rotate. In this embodiment, the rotation of the rotor of the motor 10 is transmitted to an input shaft of a gear mechanism 51, and the rotation of the output shaft of the gear mechanism 51 is transmitted to the wheels 53 via vehicle axle 52.

The inverter 20 includes, for each phase, a series connected element of an upper arm switch 21 and a lower arm switch 22. Each of the upper arm switch 21 and the lower arm switch 22 is a semiconductor switching device, which may be, for example, an N-channel MOSFET. The semiconductor switching device may also be an IGBT or the like. In each of the upper arm switch 21 and the lower arm switch 22, the high-potential terminal is a drain, and the low-potential terminal is a source. A diode 23 is connected in reverse parallel to each of the upper arm switch 21 and the lower arm switch 22 as a freewheel diode. In each phase, the midpoint between the upper arm switch 21 and the lower arm switch 22 is connected to the terminal of the coils 11 of the motor 10 respectively.

Drive circuits 24 are connected to the gate of each of the upper arm switches 21 and the lower arm switches 22 respectively. The drive circuit 24 turns on and off respective one of the upper arm switches 21 and the lower arm switches 22 based on a drive command from the control device 40. The drive circuit 24 includes a short-circuit detection unit 25 that detects a short circuit occurring in the corresponding upper arm switch 21 or lower arm switch 22. The short-circuit detection unit 25 detects an overcurrent flowing due to a short circuit in the corresponding upper arm switch 21 or lower arm switch 22, and when detecting, the short circuit the short-circuit detection unit 25 disconnects the corresponding upper arm switch 21 or lower arm switch 22. A device temperature sensor 26 for detecting the temperature of the semiconductor switching device is provided for each of the upper arm switch 21 and the lower arm switch 22.

The battery 30 is a secondary battery, such as a lithium-ion battery or a nickel-metal hydride battery. The battery 30 may be, for example, a battery pack including series connected multiple battery cells. The drain of each phase of the upper arm switch 21 is connected to positive terminal of battery 30 via a high-potential side path 31. The source of each phase of the lower arm switch 22 is connected to a negative terminal of the battery 30 via a low-potential side path 32.

In the motor system, a heat transfer section 61 is provided for the inverter 20, and a heat transfer section 62 is provided for the battery 30. The heat transfer section 61 and the heat transfer section 62 are interconnected by a refrigerant passage 63, formed by piping and the like. In the heat transfer section 61, heat transfer occurs between each of the upper arm switch 21 and the lower arm switch 22 of the inverter 20, and a refrigerant flowing through the refrigerant passage 63. In the heat transfer section 62, heat transfer occurs between the battery 30 and the refrigerant flowing through the refrigerant passage 63. Therefore, when temperatures are different between the inverter 20 and the battery 30, heat exchange occurs between the inverter 20 and the battery 30 via the refrigerant flowing through the refrigerant passage 63. Although not shown, the refrigerant passage 63 is a circulation path for circulating the refrigerant, and the refrigerant passage 63 is equipped with components such as a pump for circulating the refrigerant and a radiator for heat dissipation.

The control device 40 is primarily configured as a microcontroller, which includes a CPU. The functions provided by the microcontroller can be provided by software stored in a physical memory device and a computer executing it, by software alone, by hardware alone, or by a combination thereof. For example, when the microcontroller is provided by electronic hardware circuits, it can be provided by digital circuits containing numerous logic circuits or by analog circuits. For instance, the microcontroller executes a program stored in its own memory, which is a non-transitory tangible storage medium. The program includes programs for various arithmetic operations. When the program is executed, the method corresponding to the program is performed. The storage medium is, for example, non-volatile memory. Programs stored in the storage medium may be updated via networks such as the Internet, for example via OTA (Over The Air).

The control device 40 receives detection signals from various sensors, such as the rotation angle sensor 12, the phase-current sensor 13, and the device temperature sensor 26. The control device 40 controls the switching of the upper arm switch 21 and the lower arm switch 22 of the inverter 20, based on input detection values, to cause the controlled variable (e.g., torque) of the motor 10 to approach a command value. For example, PWM pulses are generated using a known PWM control method, each of the upper arm switch 21 and the lower arm switch 22 is switched according to the PWM pulses respectively. This causes the rotor of the motor 10 to rotate, enabling the vehicle to travel.

The control device 40 sets command values for a d-axis current and a q-axis current based on, for example, a command torque of the motor 10 while the vehicle is traveling and acquires the electrical angle θ (rotation angle) detected by the rotation angle sensor 12. The control device 40 calculates a phase-current command value for each phase based on command values for the d-axis current and q-axis current and the electrical angle θ. The control device 40 performs switching control of the upper arm switch 21 and the lower arm switch 22 of the inverter 20 based on current feedback control to cause the detected phase-currents detected by the phase-current sensor 13 approach to the phase-current command values respectively.

In the battery 30, which consists of secondary batteries such as lithium-ion storage batteries, degradation is more likely to occur when temperature of the battery is low. Therefore, it is desirable to use the battery 30 at a suitable temperature. Consequently, when the battery 30 is in a low-temperature state, it is preferable to perform a process to raise the battery temperature. Furthermore, in a vehicle, there is thermal demand for heating a passenger compartment, etc., in addition to the thermal demand for battery warming. Therefore, in this embodiment, when a heat generation request occurs for the motor system, a heat generation operation is performed. For example, when the temperature of battery 30 has decreased, the heat generation request is sent to the control device 40 from a higher-level control device or other external device, and the heat generation operation is performed by the control device 40.

In this embodiment, two control actions are performed as the heat generation operation. The first control action is the heat generation operation by increasing a switching-loss of at least one of the upper arm switch 21 and the lower arm switch 22 of the inverter 20. The second control action is the heat generation operation by the d-axis energization, which flows the d-axis current that does not generate torque in the motor 10 when the vehicle is stationary (when the motor 10 is not rotating). These control actions are described in detail below. First, the heat generation operation by increasing the switching-loss is described.

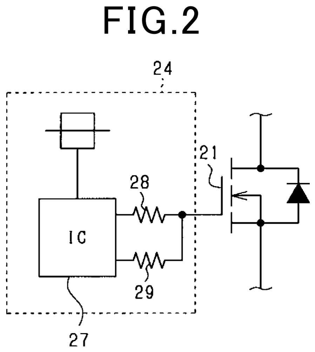

Figure 2 shows the configuration of the drive circuit 24 for the upper arm switch 21 of the inverter 20. The following describes the drive circuit 24 for the upper arm switch 21, but the drive circuit 24 for the lower arm switch 22 has a similar configuration.

The drive circuit 24 includes a drive IC 27 that receives drive commands from the control device 40. The drive IC 27 turns the upper arm switch 21 on and off. The drive IC 27 controls the charging and discharging the gate of the upper arm switch 21. The drive IC 27 turns the upper arm switch 21 on by charging the gate by applying voltage and turns the upper arm switch 21 off by discharging the gate.

The drive circuit 24 has a configuration that makes a turn-on time, which is the transition time required when the upper arm switch 21 transitions from the off state to the on state, and a turn-off time, which is the transition time required when the upper arm switch 21 transitions from the on state to the off state, variable. This configuration enables adjustment of switching-loss at each of the upper arm switch 21. Specifically, the drive circuit 24 makes the turn-on time and turn-off time variable, by switching resistance value of the gate resistance connected between the drive IC 27 and the gate of the upper arm switch 21 to adjust the time required for charging or discharging the gate of the semiconductor switching device. In this embodiment, a first gate resistance 28 and a second gate resistance 29, having different resistance values, are connected in parallel between the drive IC 27 and the gate of the upper arm switch 21. Switching between the first gate resistance 28 and the second gate resistance 29 adjusts the charging or discharging time (the turn-on time or the turn-off time) of the upper arm switch 21. The resistance value of the second gate resistance 29 is greater than that of the first gate resistance 28. The first gate resistance 28 is the gate resistance for a normal operation, and the second gate resistance 29 is the gate resistance for a switching-loss increasing operation.

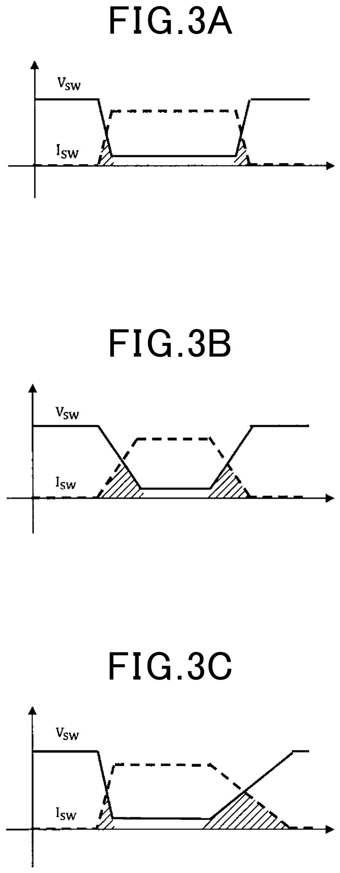

Figure 3 is a time chart showing the changes in the switch voltage Vsw between the drain and source and the switch current Isw flowing between the drain and source in the upper arm switch 21.

Figure 3A shows the changes in VsW and IsW during normal operation, i.e., when the switching-loss increasing operation is not performed. In the figure, the hatched areas indicate switching-loss during turn-on and turn-off.

Figure 3B shows the changes in VsW and IsW when the switching-loss increasing operation is performed and each of the turn-on time and the turn-off time is longer than that of during normal operation. In this case, switching-loss increases when the upper arm switch 21 is turned on or turned off, enabling promotion of generating heat at the switch the upper arm switch 21.

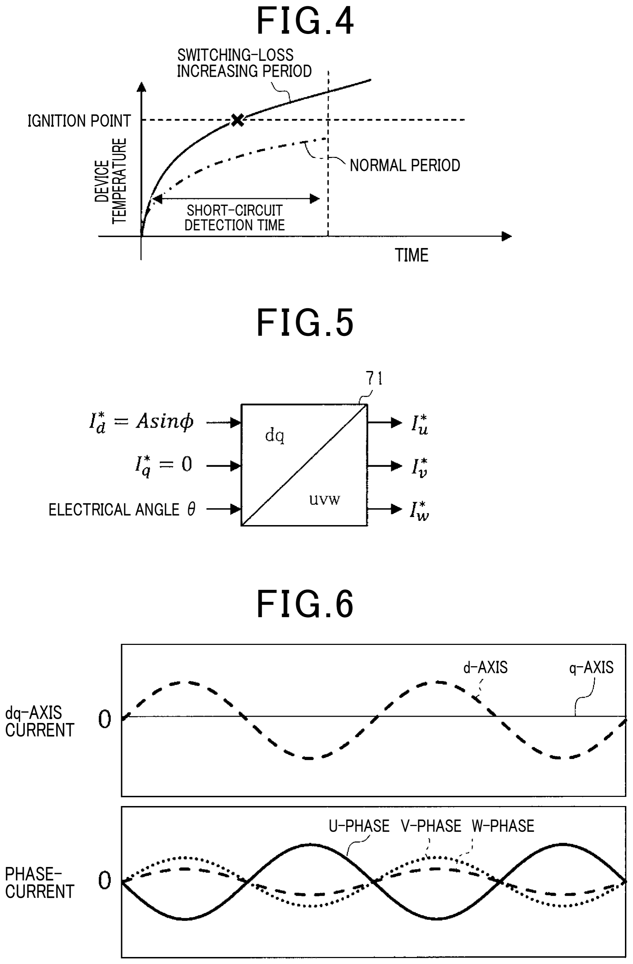

However, increasing switching-loss during turn-on causes a steep rise in the device temperature at the switch the upper arm switch 21 after turn-on begins. Consequently, when a short-circuit occurs in the upper arm before the short-circuit is detected, there is a concern that the upper arm switch 21 could overheat excessively due to excessive heat generation, potentially leading to ignition. As shown in Figure 4, during the switching-loss increase indicated by the solid line, the slope of the device temperature rise becomes steeper compared to that of the normal operation indicated by the dotted line. In this case, there is a concern that the device temperature may exceed the ignition point before the time required for short-circuit detection has elapsed.

In this embodiment, as shown in Figure 3C, the turn-off time is set longer than the turn-on time to reduce heat generation during turn-on and increase heat generation during turn-off. Consequently, during turn-off of the upper arm switch 21, a larger switching-loss occurs compared to during turn-on.

In Figure 3C, the turn-on time of the upper arm switch 21 is the same as when the switching-loss increase operation is not performed (when there is no heat generation request), while the turn-off time is longer compared to when the switching-loss increase operation is not performed. During switching-loss increasing operation in response to the heat generation request, the control device 40 performs gate charging via the first gate resistance 28 during turn-on, while performing gate discharging via the second gate resistance 29 during turn-off. This enables prompt current interruption when a short circuit is detected during turn-on.

Next, the heat generation operation by the d-axis energization is described.

In the control of the motor 10, the d-axis and the q-axis are virtual axes. The relation between the d-axis current Id flowing through the d-axis, the q-axis current Iq flowing through the q-axis, and the phase-currents Iu, Iv, Iw flowing through the UVW phases, is expressed by the following Equation (1). In Equation (1), $\theta$ is the electrical angle (rotation angle) of the motor 10.

[Math 1]

$$\begin{bmatrix} I_d \\ I_q \end{bmatrix} \times \begin{bmatrix} cos\theta & -sin\theta \\ \cos\left(\theta - \frac{2\pi}{3}\right) & -\sin\left(\theta - \frac{2\pi}{3}\right) \\ \cos\left(\theta + \frac{2\pi}{3}\right) & -\sin\left(\theta + \frac{2\pi}{3}\right) \end{bmatrix} = \begin{bmatrix} I_u \\ I_v \\ I_w \end{bmatrix} \quad (1)$$

The control device 40 sets the phase-current command values Iu*, Iv*, and Iw* for the coils 11 of each phase based on the electrical angle $\theta$ of the motor 10 and the d-axis current command value Id* and q-axis current command value Iq* (current setting unit), and controls the phase-currents flowing through each phase using these phase-current command values Iu*, Iv*, Iw* (current control unit).

In this embodiment, when the vehicle is stationary (when motor 10 is rotationally stopped), the control device 40 causes current to flow through the coils 11 of each phase without causing the motor 10 to generate torque, thereby promoting heat generation via the motor system. This causes the battery 30 to warm up. Specifically, the control device 40 performs switching control of the inverter 20 such that only the d-axis current Id flows among the d-axis current Id and the q-axis current Iq, thereby flowing phase-currents in each phase of the motor 10 in a state where no torque is generated. The control device 40 calculates the phase-currents Iu, Iv, and Iw for each phase based on Equation (1), where the electrical angle $\theta$ of the motor 10 at stop is used, and the q-axis current Iq is set to zero.

Figure 5 illustrates the processing of the dq-UVW conversion when the heat generation operation is performed. Figure 5 shows a three-phase conversion unit 71, which converts the dq-axis current command values Id* and Iq* into the UVW phase-current command values Iu*, Iv*, and Iw*. The three-phase conversion unit 71 receives Asin$\varphi$ as the d-axis current command value Id* and 0 as the q-axis current command value Iq*. The electrical angle $\theta$ is the electrical angle $\theta$ of the motor 10 in a stationary state. In "Asin$\varphi$", A is the amplitude command value specifying the amplitude of the d-axis current, and $\varphi$ is the phase varying at a predetermined angular velocity. This sets the d-axis current command value Id* as an alternating current varying at a frequency of approximately 20 Hz, for example. In this case, the d-axis current command value Id* is set as an alternating d-axis current varying in both positive and negative directions. Based on this d-axis current command value Id* (alternating d-axis current), the phase-current command values Iu*, Iv*, and Iw* varying in both positive and negative directions are calculated.

Figure 6 is a time chart showing the current waveforms of the d-q axis currents and the phase-currents of each phase. In Figure 6, while the q-axis current Iq is maintained at zero, the d-axis current Id alternates between positive and negative sides with a sinusoidal waveform. The phase-currents Iu, Iv, and Iw of each phase vary alternately with amplitudes corresponding to the electrical angle θ (stopping position) of the motor 10. When the phase-currents Iu, Iv, and Iw vary alternately in both positive and negative directions, the first state and the second state are switched alternately. The first state is a state where a positive phase-current flows in one of the three phases and negative phase-currents flow in the remaining two phases. The second state is a state where positive phase-currents flow in two of the three phases and a negative phase-current flows in the remaining one phase. Here, for the U-phase coil, V-phase coil, and W-phase coil of the coils 11, the current flowing from the anti-neutral point to the neutral point is defined as positive current, and the current flowing in the opposite direction is defined as negative current.

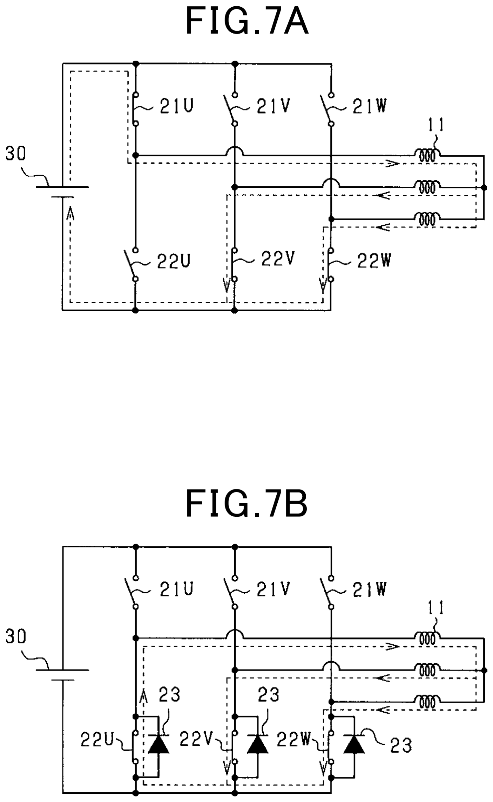

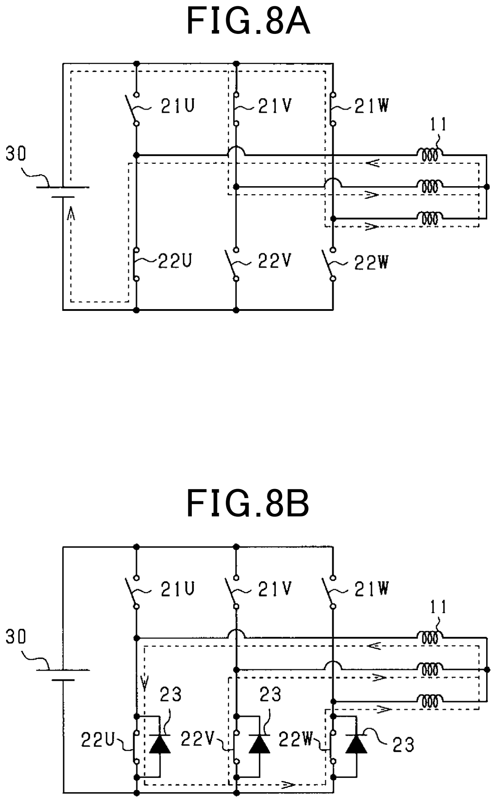

An example of the switching pattern when the heat generation operation by the d-axis energization is performed, is explained using Figures 7 and 8. Figure 7 shows the switching pattern when a positive current flows as the U-phase-current and negative currents flow as the V-phase and W-phase-currents. Figure 8 shows the switching pattern when positive currents flow as the V-phase and W-phase-currents and a negative current flows as the U-phase current. Here, the upper arm switches 21 for three phases are referred to as switches 21U, 21V, and 21W, and the lower arm switches 22 for three phases are referred to as switches 22U, 22V, and 22W.

In Figure 7A, the switch 21U is turned on and the switches 21V and 21W are turned off in the upper arm. In the lower arm, the switch 22U is turned off and the switches 22V and 22W are turned on. Consequently, positive current flows from the battery 30 as the U-phase current, while negative current flows as the V-phase and W-phase currents. Furthermore, continuing from the state shown in Figure 7A, in Figure 7B, as the switch 21U in the upper arm is turned off, all the upper arm switches 21 in the upper arms are turned off, while all the lower arm switches 22 in the lower arm are turned on. This causes current to circulate in a return path formed by the lower arm switch 22 and the coils 11 for each phase. In Figures 7A and 7B, the switch 21U in the upper arm and the switch 22U in the lower arms of the U-phase are alternately turned on and off, and this switching is repeated at a predetermined cycle during the period when a positive current flows in the U-phase.

Furthermore, in Figure 8A, in the upper arm, the switches 21V and 21W are turned on, and the switch 21U is turned off; while in the lower arm, the switches 22V and 21W are turned off, and the switch 22U is turned on. Consequently, positive current flows from the battery 30 as the V-phase and W-phase currents, and negative current flows as the U-phase current. Furthermore, continuing from the state shown in Figure 8A, in Figure 8B, as the switches 21V and 21W in the upper arm are turned off, all the upper arm switches 21 are turned off, while all the lower arm switches 22 are turned off in the lower arm. This causes current to circulate in the return path formed by the lower arm switch 22 and coils 11 for each phase. In Figures 8A and 8B, the upper arm switches 21V and 21W and the lower arm switches 22V and 22W for the V and W phases are alternately turned on and off. This switching is repeated at a predetermined cycle during the period when positive current flows in the V and W phases.

In the heat generation operation, the phase-current command values Iu*, Iv*, Iw* set based on the AC d-axis current causes the phase-currents Iu, Iv, Iw to flow in all phases. As a result, switching control is performed in all phases in the inverter 20, and switching-loss increasing operation is simultaneously performed during this all-phase switching control. By increasing switching-loss in both the upper arm switch 21 and the lower arm switch 22 for all phases in the inverter 20, heat generation is distributed across each switch, unlike when switching-loss increase occurs only in some phases. This enables efficient heat generation in the motor system.

As shown in Figures 7B and 8B, when the circulating current through the path formed by the lower arm switch 22 and the coils 11 of each phase, current flows from the source to the drain through the lower arm switch 22 of one of the phases (switch 22U in Figure 7B, switches 22V and 22W in Figure 8B). However, current can also flow through the diode 23. When current flows through the lower arm switch 22 in the on-state, conduction loss is reduced, potentially resulting in lower losses than when only the diode 23 is energized. Furthermore, when current flows through the diode 23, an increase in switching-loss due to switching on and off the lower arm switch 22 is not expected. Therefore, it is considered that when current flows from the source to the drain of the lower arm switch 22 during current circulation, the benefit of performing the switching-loss increasing operation through switching on and off the lower arm switch 22 is not obtained.

Therefore, after turning on the upper arm switch 21 in one phase to flow phase-current through coils 11, when turning off the upper arm switch 21 to return the phase current, it is possible to keep the lower arm switch 22, which is in the same phase with that upper arm switch 21, in the off state and return the phase-current through the diode 23 connected in parallel with that lower arm switch 22. In this case, it is desirable that only the upper arm switch 21 among the upper arm switch 21 and the lower arm switch 22 is switched on and off, as switching-loss due to switching on and off is expected in the upper arm switch 21, and the lower arm switch 22 is not switched on and off. In Figure 7B, since the switch 22U is not switched on and off, current is returned via the diode 23 of the U-phase lower arm. In Figure 8B, since the switches 22V and 22W are not switched on and off, current is returned via the diodes 23 of the V-phase and W-phase lower arms.

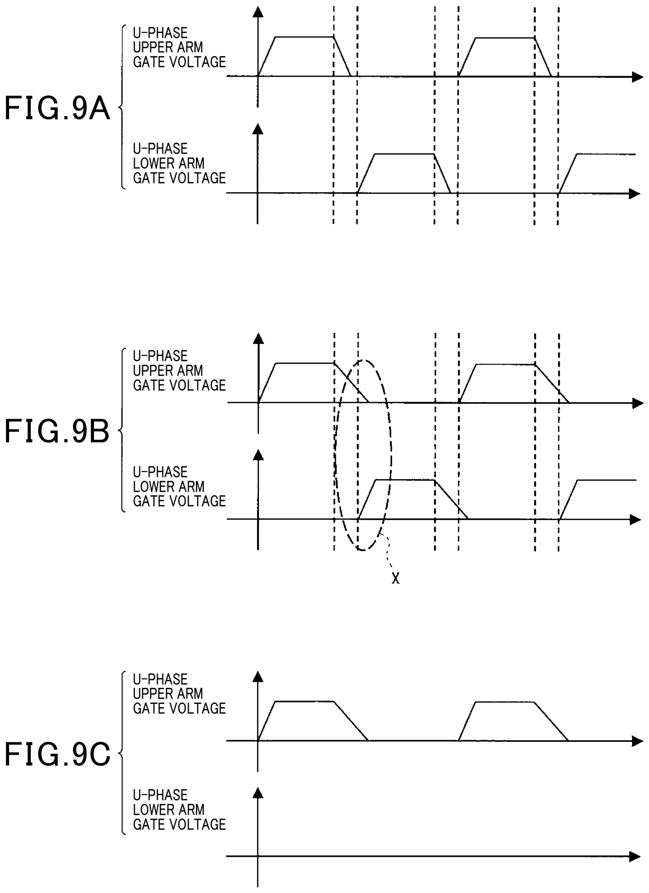

Figure 9 shows the gate voltage transition for the switches 21U and 22U in the upper and lower arms. Figure 9A shows the gate voltage transition for the switches 21U and 22U during normal operation. Figure 9B shows the gate voltage transition for the switches 21U and 22U when the switching-loss increasing operation is performed. In Figure 9B, the turn-off time of each of the switches 21U and 22U is longer compared to Figure 9A, raising the concern that the switches 21U and 22U may turn on simultaneously (point X in the figure). For avoiding this, in the switching of the upper and lower arms, a dead time is set during normal operation anticipating the time required for turn-off. However, when turn-off is delayed, the dead time may elapse before turn-off is complete, creating a risk of a short circuit between the upper and lower arms.

In contrast, in Figure 9C, only the upper arm switch 21U is switched among the upper arm switch 21U and the lower arm switch 22U. This suppresses the occurrence of a short circuit between the upper and lower arms, even if the turn-off time of the switch 21U is longer than when the normal operation is performed (even if turn-off is delayed).

Furthermore, when alternating the phase-current of each phase in both positive and negative directions, as shown in Figure 6, the amplitudes of the phase-currents for each phase do not match. Consequently, caloric value generated by the upper arm switch 21 and the lower arm switch 22 differ for each phase, potentially resulting in different device temperature values for each phase. Therefore, in this embodiment, to match the respective caloric value of the upper arm switch 21 and the lower arm switch 22 for each phase, the period for increasing switching-loss (the period for increasing the gate resistance value) is adjusted for each phase.

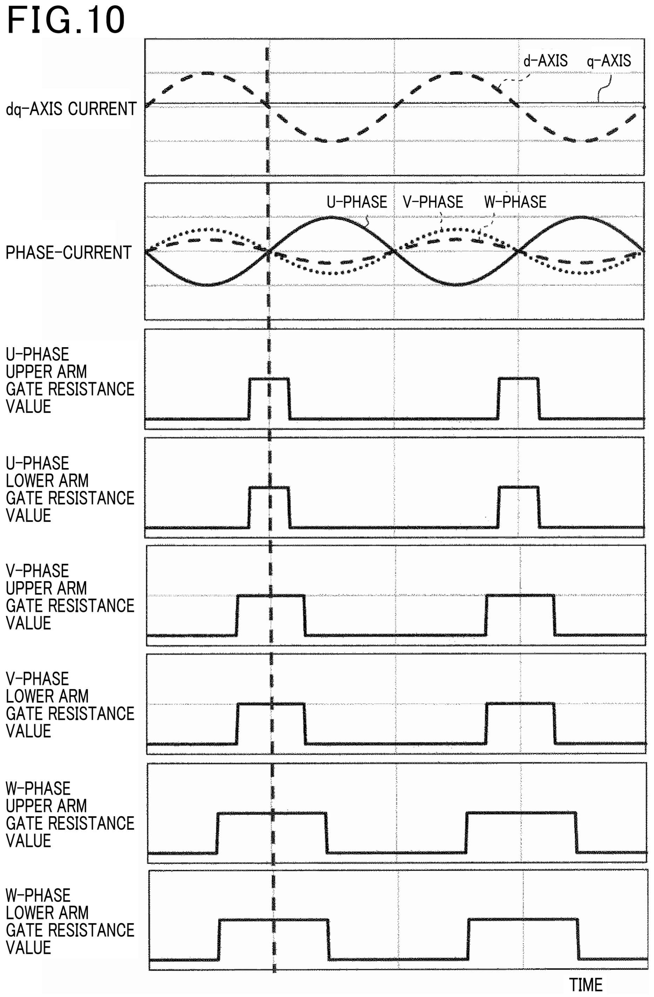

Figure 10 shows an example of controlling the gate resistance switching for each phase. In Figure 10, when the phase-currents of each phase change alternately in both positive and negative directions, the U-phase-current has the largest amplitude, followed by the V-phase-current and then the W-phase current. Therefore, in the heat generation operation by the d-axis energization, it is anticipated that among each upper arm switch 21 and lower arm switch 22 for each phase, the U-phase switch will reach the highest temperature, while the W-phase switch will reach the lowest temperature. Thus, in this embodiment, the switching-loss increasing period is set variably based on the magnitude of the phase-current flowing in each phase.

Specifically, the control device 40 acquires the amplitude of the phase-current for each phase by detecting or estimating that. Based on the difference in current amplitude between phases, the control device 40 sets the period during which the gate resistance value is increased for each phase, i.e., the switching-loss increasing period. The switching-loss increasing period may be set as a time ratio representing the proportion of switching-loss increasing period within one cycle of the alternating current change for each phase current. In Figure 10, since the phase-current amplitudes are U-phase > V-phase > W-phase, the period (switching-loss increasing period) during which the gate resistance value is increased is set shortest for the U phase and longest for the W phase.

The control device 40 may set the period for performing switching-loss increase for each phase based on the device temperature detected by device temperature sensor 26. In this case, the control device 40 sets a target value (target temperature) for the device temperature at each phase switch and sets the period for performing switching-loss increase, i.e., the period for increasing the gate resistance value, based on the deviation between the device temperature detected by device temperature sensor 26 and the target temperature. This allows the upper arm switch 21 and the lower arm switch 22 of each phase to be controlled to their desired temperatures. Furthermore, when only the upper arm switch 21 of the upper arm is switched among the upper arm switch 21 and the lower arm switch 22, switching-loss increasing period may be set only for the upper arm switch 21 based on the device temperature feedback control.

As described above, setting the switching-loss increasing period based on the device temperature feedback control suppresses variations in the device temperature caused by differences in the amplitude of the phase-current for each phase.

Furthermore, since the relationship between the dq-axis current and the phase-current depends on the electrical angle, depending on the electrical angle $\theta$ of the motor 10, current may flow very little in some phases. This could adversely affect the increase in losses for some phases. That is, when the phase-current command values Iu*, Iv*, Iw* for each phase are set according to the Equation (1), depending on the electrical angle $\theta$ of the motor 10 when rotation is stationary, the phase-current of one phase may become 0 or near 0. This could result in an excessively large difference in the caloric value generated between phases. Therefore, in this embodiment, the electrical angle $\theta$ of the motor 10 is set to an electrical angle $\theta$ at which the phase-currents of all phases are above a predetermined threshold (angle setting section). Based on this electrical angle $\theta$, the phase-current command values Iu*, Iv*, and Iw* for each phase are set.

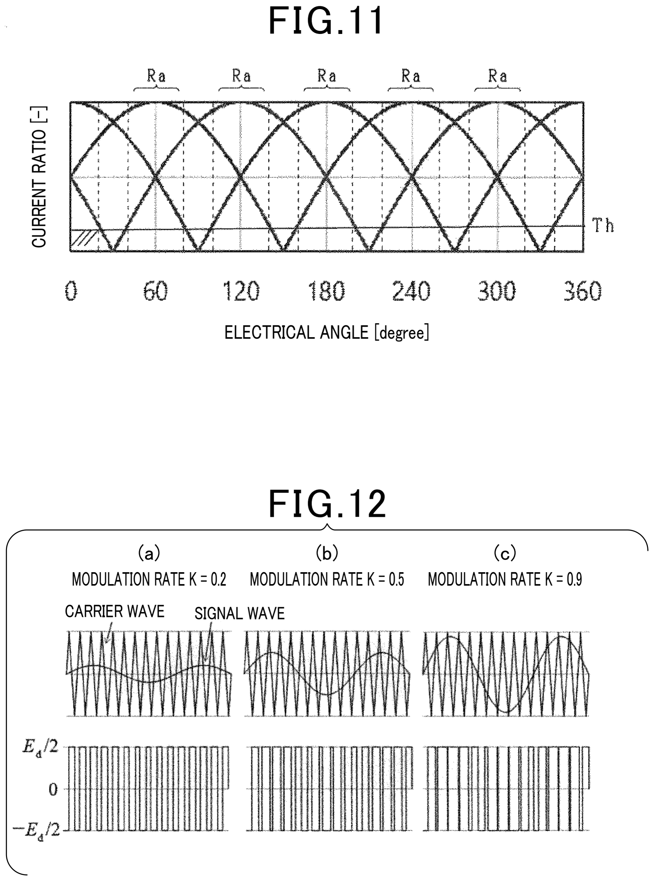

Specifically, as shown in Figure 11, when the current ratio of the phase-currents changes according to the electrical angle $\theta$, it is desirable that the electrical angle $\theta$ during the heat generation operation performed by the d-axis energization is within a predetermined range Ra where the current ratio of each phase is equal to or greater than a threshold Th. The current ratio is the ratio of each phase-current to the total current flowing through the coils 11. In Figure 11, since the phase-current of one phase becomes zero at electrical angles $\theta$ of 30°, 90°, 150°, 210°, 270°, and 330°, the range excluding the vicinity of these angles is defined as the predetermined range Ra. In this case, when the motor 10 is stationary and the detected electrical angle $\theta$a detected by the rotation angle sensor 12 is not within the predetermined range Ra, it is desirable to generate torque in the motor 10 and operate the electrical angle θ such that it enters the predetermined range Ra.

Furthermore, while the vehicle is travelling, the modulation rate in the inverter 20 changes in accordance with changes in the operating state of the motor 10. Furthermore, the duty ratio of both the upper arm switch 21 and the lower arm switch 22 changes in accordance with the change in the modulation ratio. Here, when the modulation ratio is large and the turn-on time of the drive pulses (PWM pulses) for both the upper arm switch 21 and the lower arm switch 22 becomes shorter than a predetermined time, it becomes difficult to prolong the turn-on time or turn-off time, i.e., to perform the switching-loss increasing operation.

Therefore, in this embodiment, when the turn-on time of the drive pulses for the upper arm switch 21 and the lower arm switch 22 is shorter than the predetermined time, the heat generation operation is not performed by increasing switching-loss. Figure 12 is a time chart showing the switching control for three states with different modulation rates. In Figure 12, since the drive pulse on time becomes shorter than the predetermined time in case (c), the switching-loss increasing operation is not performed. Note that in case (c) of Figure 12, the switching-loss increase may be omitted throughout the entire period, or the switching-loss increase may be omitted only during the period where the drive pulse turn-on time is shorter than the predetermined time.

Incidentally, when performing the heat generation operation by the d-axis energization while the vehicle is stationary (when the motor 10 rotation is stationary) and the electrical angle of motor 10 recognized by the control device 40 differs from the actual electrical angle, unintended q-axis current may flow. In this case, despite the vehicle is stationary, unnecessary torque may be generated in the motor 10, potentially causing the electrical angle deviation to increase cumulatively. Specifically, in the three-phase conversion unit 71 shown in Figure 5, when the detected angle from the rotation angle sensor 12 is input as the electrical angle θ, any detection error in the rotation angle sensor 12 causes a discrepancy between the angle recognized by the control device 40 and the actual electrical angle. Particularly while the vehicle is stationary, an electrical angle error of several degrees is conceivable. This electrical angle miscalculation raises concerns that unnecessary rotation may occur in the motor 10.

Therefore, in this embodiment, as a preliminary operation of the heat generation operation by the d-axis energization, a DC d-axis current is applied to the motor 10. This performs a positioning control to align the electrical angle θ of the motor 10 with the recognized angle (command angle α) perceived by the control device 40. Following this positioning control, the heat generation operation is performed using an AC d-axis current. This aligns the actual electrical angle with the angle recognized by the control device 40. Based on the premise that the actual electrical angle is the command angle α, the heat generation operation is performed by varying the d-axis current without referencing the detection value from the rotation angle sensor 12.

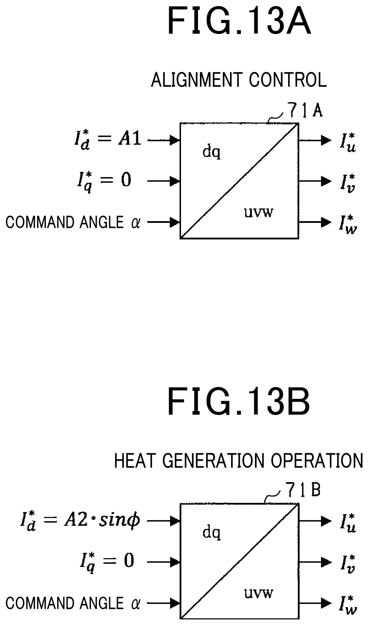

Figure 13A is a diagram showing the processing of the dq-UVW transformation when performing the alignment control, and Figure 13B is a diagram showing the processing of the dq-UVW transformation when performing the heat generation operation using the AC d-axis current.

As shown in Figure 13A, the three-phase conversion unit 71A receives A1 as the d-axis current command value Id* and 0 as the q-axis current command value Iq*. Furthermore, a predetermined command angle α is input as the electrical angle θ. The command angle α is the angle (within a predetermined range Ra) where the total current of each phase exceeds a predetermined threshold, as explained in Figure 11. The three-phase conversion unit 71A calculates the phase-current command values Iu*, Iv*, and Iw* for each phase based on the d-axis current command value Id* (= A1) and the command angle α. In this case, the d-axis current command value Id* is the DC d-axis current, and the phase-current command values Iu*, Iv*, and Iw* are each calculated as DC phase-currents. Then, during the implementation of the alignment control, the phase-currents of each phase are controlled using the phase-current command values Iu*, Iv*, and Iw* calculated by the three-phase conversion unit 71A.

Note that the calculation process of the phase-current command values Iu*, Iv*, and Iw* in the three-phase conversion unit 71A corresponds to a "first setting process," and the alignment control using those phase-current command values Iu*, Iv*, and Iw* corresponds to a "first current control."

Furthermore, as shown in Figure 13B, the three-phase conversion unit 71B receives A2·sinφ as the d-axis current command value Id*, and 0 as the q-axis current command value Iq*. Additionally, a predetermined command angle α is input as the electrical angle θ, like the three-phase conversion unit 71A. The three-phase conversion unit 71B calculates the phase-current command values Iu*, Iv*, and Iw*, which vary alternately in both positive and negative directions, using the AC d-axis current command value Id*, which also varies alternately in both positive and negative directions.

The calculation process of the phase-current command values Iu*, Iv*, and Iw* in the three-phase conversion unit 71B corresponds to a "second setting process," and the heat generation operation based on these phase-current command values Iu*, Iv*, and Iw* corresponds to a "second current control."

In the three-phase conversion unit 71A shown in Figure 13A, the maximum absolute value of the DC d-axis current is set to A1. In the three-phase conversion unit 71B shown in Figure 13B, the maximum absolute value of the AC d-axis current is set to A2. A1 and A2 are amplitude command values that define the amplitude of the d-axis current. It is desirable that A1 > A2. However, A1 and A2 may also be equal (A1 = A2). That is, the absolute value of the DC d-axis current should be greater than the absolute value of the AC d-axis current. In this case, A2 may be determined based on the magnitude of the heat generation demand, and then A1 is set to a value greater than A2. For example, A2 may be determined based on the respective device temperature values of the upper arm switch 21 and the lower arm switch 22.

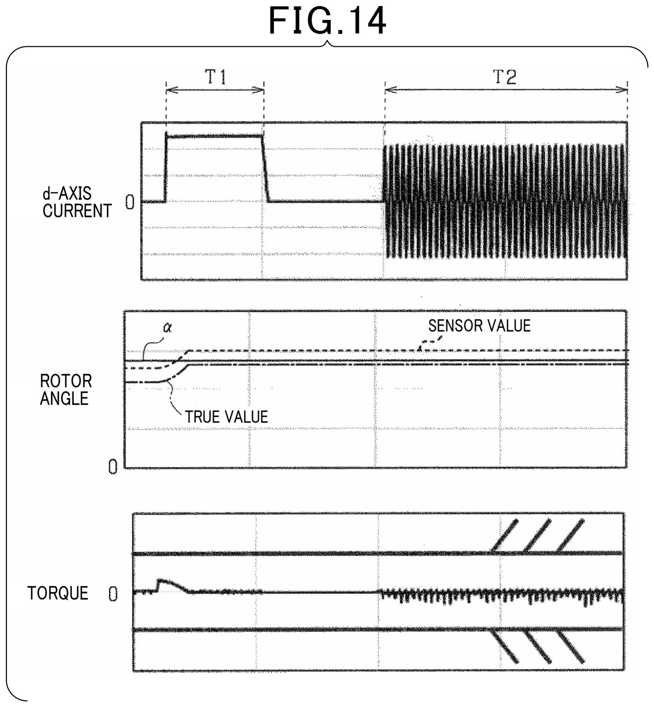

Figure 14 is a time chart for specifically illustrating the alignment control shown in Figure 13 and the heat generation operation based on the AC d-axis current. In Figure 14, the detected electrical angle $\theta a$ (sensor value) detected by the rotation angle sensor 12 as the rotor angle of the motor 10 is shown by a dashed line, the actual electrical angle $\theta b$ (true value) in motor 10 is shown by a dotted line, and the constant command angle $\alpha$ is shown by a solid line. In this example, the detected electrical angle $\theta a$ has an angular error relative to the actual electrical angle $\theta b$.

In Figure 14, the alignment control is performed during period T1 according to the heat generation request. The electrical angle $\theta$ of motor 10 is set to the command angle $\alpha$, and the DC d-axis current is set to the d-axis current command value Id*. Furthermore, the phase-currents of the coils 11 of each phase are controlled based on the phase-current command values Iu*, Iv*, Iw* calculated from the command angle $\alpha$ and the DC d-axis current. This adjusts the electrical angle of motor 10 to the command angle $\alpha$, which is the recognized angle by the control device 40. At this time, even if the detected electrical angle $\theta a$ has a detection error, the electrical angle of motor 10 is operated to the desired electrical angle without being affected by that detection error.

Subsequently, during period T2, the heat generation operation is performed using the AC d-axis current. The electrical angle $\theta$ of motor 10 is set to the command angle $\alpha$, and the AC d-axis current is set to the d-axis current command value Id*. Furthermore, the phase-currents in the coils 11 of each phase are controlled using the phase-current command values Iu*, Iv*, and Iw* calculated based on the command angle $\alpha$ and the AC d-axis current. At this time, while the electrical angle of the motor 10 is maintained at the command angle $\alpha$ adjusted by the alignment control, energization is performed in the coils 11 for each phase. Furthermore, since the deviation between the recognized angle of the control device 40 and the actual electrical angle is suppressed, the generation of unintended q-axis torque is suppressed, and the motor 10 is held in a stopped state.

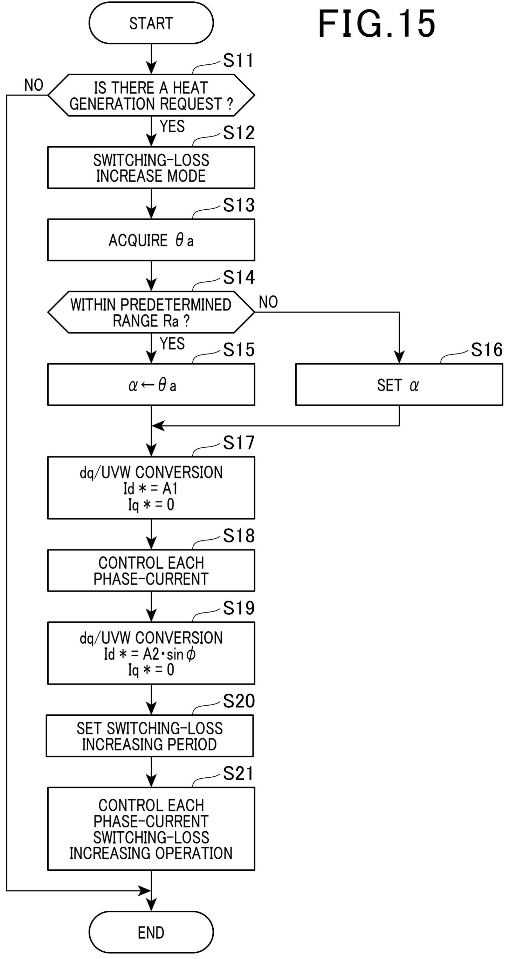

Figure 15 is a flowchart showing the procedure of the heat generation operation when the vehicle is stationary. This process is repeatedly performed at predetermined intervals by the control device 40 when the vehicle is stationary, for example, when the vehicle's ignition switch (IG switch) is in the off state. In this case, the heat generation operation is performed by both increasing switching-loss of the upper arm switch 21 and the lower arm switch 22, and the d-axis energization which does not generate torque in the motor 10.

In step S11, the control device 40 determines whether there is a heat generation request. For example, when the heat generation request is received from the higher-level control device, the control device determines that there is the heat generation request. When it is determined that there is the heat generation request, the process proceeds to step S12. When it is determined that there is no heat generation request, the process terminates.

In step S12, the control device 40 sets a control mode of the inverter 20 to a switching-loss increase mode. This ensures that switching-loss increasing operation is appropriately performed via the switching control of the inverter 20 when the vehicle is stationary.

Subsequently, in step S13, the control device 40 acquires the detected electrical angle $\theta a$ detected by the rotation angle sensor 12. In step S14, the control device 40 determines whether the detected electrical angle $\theta a$ is within the predetermined range Ra. The predetermined range Ra is the range defined by the electrical angle at which the phase-currents of all phases of the coils 11 become equal to or greater than the predetermined threshold. When it is determined that the detected electrical angle $\theta a$ is within the predetermined range Ra in step S14, the process proceeds to step S15. When it is determined that the detected electrical angle $\theta a$ is not within the predetermined range Ra, the process proceeds to step S16.

In step S15, the control device 40 sets the detected electrical angle $\theta a$ as the command angle $\alpha$ used for the heat generation operation by the d-axis energization. In step S16, control device 40 sets a predetermined electrical angle within the predetermined range Ra as the command angle $\alpha$. To suppress excessive changes in the rotor angle of the motor 10, it is desirable to set the command angle $\alpha$ such that the change from the detected electrical angle $\theta a$ is within the predetermined value. The processing in steps S15 and S16 ensures that a minimum current flows through each phase.

Subsequently, in steps S17 and S18, the control device 40 sets the DC d-axis current as the d-axis current command value Id*, and performs the alignment control to adjust the electrical angle of the motor 10 to the command angle $\alpha$. In step S17, the d-axis current command value Id* is set to A1, the q-axis current command value Iq* is set to 0, and the electrical angle $\theta$ is set to the command angle $\alpha$. The phase-current command values Iu*, Iv*, and Iw* are then calculated by the dq/UVW transformation. In step S18, switching control is performed for the upper arm switch 21 and the lower arm switch 22 of each phase based on the phase-current command values Iu*, Iv*, and Iw* calculated in step S17, thereby controlling the phase-current flowing through each phase of the coils 11.

When a DC d-axis current is applied during the alignment control, the switching-loss increasing operation is not performed for either upper arm switch 21 or lower arm switch 22.

Subsequently, in steps S19 to S21, the control device 40 sets the AC d-axis current as the d-axis current command value Id* and performs the heat generation operation by the d-axis energization. The control device 40 also performs the heat generation operation by increasing the switching-loss.

Specifically, in step S19, the control device 40 sets the d-axis current command value Id* to A2·sinφ, the q-axis current command value Iq* to 0, and the electrical angle θ to the command angle α. Then the control device 40 calculates the phase-current command values Iu*, Iv*, and Iw* by the dq/UVW transformation.

In step S20, the control device 40 sets the switching-loss increasing period based on the magnitude of the phase-current flowing in each phase. Since the amplitude of the phase-current in each phase is determined according to the command angle α of the motor 10, the switching-loss increasing period may be set for respective phases based on the current amplitude of respective phases. Thus, for example as shown in Figure 10, the period (switching-loss increasing period) during which the gate resistance value is increased is set for each phase.

In step S21, the control device 40 performs switching control for the upper arm switch 21 and the lower arm switch 22 for each phase based on the phase-current command values Iu*, Iv*, Iw* calculated in step S19, thereby controlling the phase-current flowing through the coils 11 of each phase. The control device 40 performs the following processes as the switching-loss increasing operation:

(1) The control device 40 switches the respective gate resistance of the upper arm switch 21 and the lower arm switch 22 in the drive circuit 24 to the gate resistance for the switching-loss increasing operation, thereby prolonging the transition time during switch on and off. The control device 40 sets the respective gate resistance of the upper arm switch 21 and the lower arm switch 22 to the second gate resistance 29 for the switching-loss increasing operation when the switching-loss increasing period is set in step S20, and sets the respective gate resistance of the upper arm switch 21 and the lower arm switch 22 to the first gate resistance 28 for the normal operation when the switching-loss increasing period is not set.

(2) The control device 40 sets the turn-off time longer than the turn-on time for each of the upper arm switch 21 and the lower arm switch 22. The control device 40 may set the turn-on time to the same duration as when there is no heat generation request and set the turn-off time longer than when there is no heat generation request.

(3) The control device 40 performs switching only on the upper arm switch 21, where an increase in switching is expected and does not perform switching on the lower arm switch 22.

Instead of the processing described in (2) above, the control device 40 may set both the turn-on time and the turn-off time to longer durations than when there is no heat generation request. Furthermore, instead of the processing described in (3) above, the control device 40 may perform switching at both the upper and lower arms of inverter 20, specifically at each of the upper arm switch 21 and the lower arm switch 22.

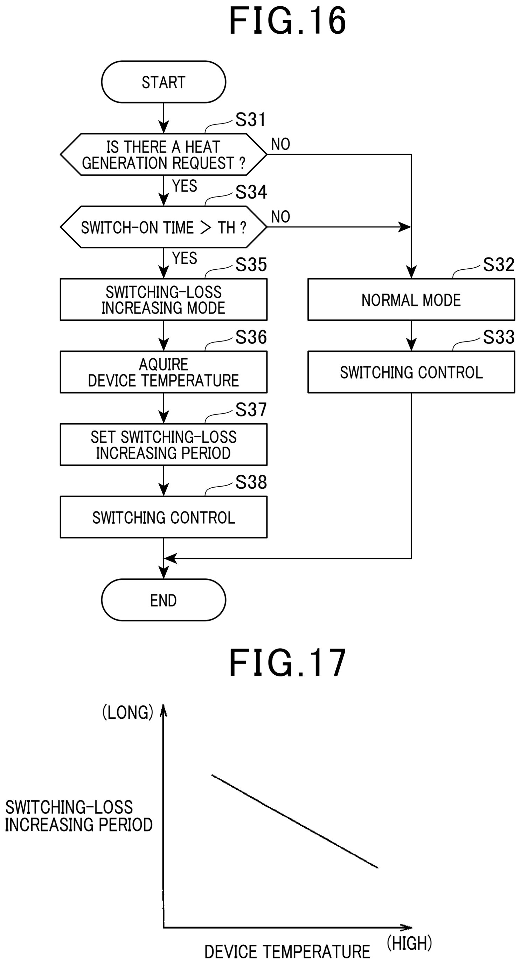

Figure 16 is a flowchart showing the procedure of the heat generation operation while the vehicle is travelling. This process is repeatedly executed by the control device 40 at predetermined intervals while the vehicle is travelling, for example, when the vehicle's power switch (IG switch) is in the on-state. While the vehicle is travelling, the heat generation operation is performed by increasing the switching-loss of each of the upper arm switch 21 and the lower arm switch 22.

In step S31, control device 40 determines whether there is a heat generation request. For example, when the heat generation request is not received from a higher-level control device, the control device 40 skips step S31 and proceeds to step S32. In step S32, the control device 40 sets the control mode of the inverter 20 to a normal mode. In the subsequent step S33, the control device 40 performs a normal mode control as the switching control for the inverter 20.

When it is determined that there is the heat generation request, the control device 40 proceeds to step S34. In step S34, the control device 40 determines whether the switch-on time of the PWM pulse that turns the upper arm switch 21 and the lower arm switch 22 on and off is longer than a predetermined time TH. When it is determined that the PWM pulse is longer than the predetermined time TH, the control device 40 proceeds to step S35, and when it is determined that the PWM pulse is equal to or shorter than the predetermined time TH the control device 40 proceeds to step S32. When it is determined that the PWM pulse is equal to or shorter than the predetermined time TH, the control device 40 does not perform the switching-loss increasing operation.

In step S35, the control device 40 sets the control mode of the inverter 20 to the switching-loss increase mode. This causes the switching-loss increasing operation to be appropriately performed by the switching control of inverter 20 while the vehicle is travelling.

In step S36, the control device 40 acquires the device temperature detected by the device temperature sensor 26. In the subsequent step S37, the control device 40 sets the switching-loss increasing period to perform the switching-loss increasing operation based on the device temperature. The switching-loss increasing period may be set based on a relationship shown in Figure 17, for example. Figure 17 defines the relationship where a lower device temperature corresponds to a longer switching-loss increasing period. The switching-loss increasing period may be set as a time ratio indicating the proportion of switching-loss increasing period within one cycle of the alternating current change of the phase-current for each phase. The switching-loss increasing period may be set for each phase.

Subsequently, in step S38, the control device 40 performs the following processes as heat generation operation due to switching-loss increase.

· The control device 40 switches the respective gate resistance of the upper arm switch 21 and the lower arm switch 22 in the drive circuit 24 to the gate resistance for loss increase, thereby prolonging the transition time during switch on and off. The control device 40 sets the respective gate resistance of the upper arm switch 21 and the lower arm switch 22 to the second gate resistance 29 for the switching-loss increasing operation when the switching-loss increasing period is set in step S37, and sets the respective gate resistance of the upper arm switch 21 and the lower arm switch 22 to the first gate resistance 28 for the normal operation when the switching-loss increasing period is not set.

· The control device 40 sets the turn-off time longer than the turn-on time for each of the upper arm switch 21 and the lower arm switch 22. The control device 40 may set the turn-on time to the same duration as when there is no heat generation request and set the turn-off time longer than when there is no heat generation request.

· The control device 40 performs switching only on the upper arm switch 21, where an increase in switching is expected and does not perform switching on the lower arm switch 22.

The control device 40 may set both the turn-on time and the turn-off time to longer durations than when there is no heat generation request. Furthermore, the control device 40 may perform switching at both the upper and lower arms of inverter 20, specifically at each of the upper arm switch 21 and the lower arm switch 22.

According to the present embodiment described in detail above, the following excellent effects are obtained.

The control device 40 extends the duration of at least one of the turn-on and turn-off periods for both the upper arm switch 21 and the lower arm switch 22 (semiconductor switching device) in the inverter 20 when there is the heat generation request in the motor system, than when there is no heat generation request. This generates heat in both the upper arm switch 21 and the lower arm switch 22 of the inverter 20 by increasing in the switching-loss. As a result, efficient heat generation operation is performed in the motor system.

During the heat generation operation by the switching-loss increase, the device temperature rises faster than during normal operation. Therefore, when a short-circuit abnormality occurs in the upper or lower arm of inverter 20, there is concern that the device temperature may rise excessively before the short-circuit is detected during switch-on. In this regard, the control device 40 generates a larger switching-loss during the turn-off of both the upper arm switch 21 and the lower arm switch 22 compared to their turn-on, allowing the turn-on time to be relatively shortened. This suppresses the undesirable situation where the device temperature excessively rises before the short-circuit is detected during switch-on.

In situations where the short-circuit abnormality occurs in the upper and lower arms of the inverter 20, it is necessary to quickly interrupt the current when the short-circuit is detected during switch-on. Therefore, the control device 40 sets the turn-on times of the upper arm switch 21 and the lower arm switch 22 to be the same as when there is no generation request, while setting their turn-off times longer than when there is no heat generation request. Since an increase in the switching-loss during turn-on is not expected, it is possible to interrupt current promptly in the upper arm switch 21 and the lower arm switch 22.

When performing the heat generation operation by the d-axis energization, the control device 40 turns on the upper arm switch 21 of any phase to flow phase-current, and when turning off the upper arm switch 21 to return the phase current, the control device 40 the lower arm switch 22 which is in the same phase as the upper arm switch 21 of "any phase". Then the phase-current returns and flows through the diode 23. As a result, even if the switching-loss increasing operation is not performed for the lower arm switch 22, the heat generation due to current flowing through the diode 23 is expected. Furthermore, when the on and off durations transition time of the upper arm switch 21 and the lower arm switch 22 are long, there is a risk of short circuits in the upper and lower arms. However, since only upper arm switch 21 is switched among the upper arm switch 21 and the lower arm switch 22 in the upper and lower arms, the occurrence of short circuits in the upper and lower arms is suppressed.

While the vehicle is travelling, the drive duty may change according to the vehicle's travelling state, potentially resulting in the PWM pulse being shorter than a predetermined time. Furthermore, when the PWM pulse is short, prolonging the respective transition time of the upper arm switch 21 and the lower arm switch 22 is expected to significantly affect current control. Therefore, the control device 40 does not perform the switching-loss increasing operation when the om time of the PWM is shorter than the predetermined time. This suppresses the adverse effect of the heat generation operation caused by the switching-loss increasing on current control while the vehicle is travelling.

The control device 40 sets the period during which the respective transition times (turn-on time, turn-off time) of the upper arm switch 21 and the lower arm switch 22 are prolonged, i.e., the period during which the switching-loss increase is performed, based on the device temperature (switch temperature) of the semiconductor switching device. This allows proper management of the device temperature when performing the heat generation operation by the switching-loss increase, thereby suppressing degradation of the semiconductor switching device and preventing overheating.

The control device 40 turns the upper arm switch 21 and the lower arm switch 22 on and off in the coils 11 for all phases, in a case that the current control (the heat generation operation by the AC d-axis energizing) is performed such that alternating phase-currents flow in both positive and negative directions through the coils 11 for each phase when the motor 10 is stationary (the vehicle is stationary). During this current control performance, the control device 40 performs the heat generation operation (extending the transition time of the upper arm switch 21 and the lower arm switch 22 for each phase) by increasing switching-loss. This enables generating switching-loss in both the upper arm switch 21 and the lower arm switch 22 for all phases, preventing situations where heat generation occurs only in switches of certain phases from occurring.

When performing the heat generation operation by the d-axis energization and causing the phase-current of each phase to change alternately in both positive and negative directions, the amplitude of the phase-current may not match across phases. Consequently, caloric value of heat generated by the upper arm switch 21 and the lower arm switch 22 may differ for each phase. Therefore, the control device 40 sets the period during which the transition time (turn-on time, turn-off time) of both the upper arm switch 21 and the lower arm switch 22 is prolonged based on the magnitude of the phase-current for each phase, i.e., the period during which the switching-loss increasing operation is performed. The control device 40 adjusts the time ratio for the period during which the gate resistance is increased (the time ratio for the period using the second gate resistance 29 for loss increase) for each phase. This allows the difference in heat generation between the upper arm switch 21 and the lower arm switch 22 for each phase to be minimized, even if the amplitudes of the phase-currents for each phase are not identical.

When performing current control to cause alternating phase-currents to flow in both positive and negative directions through the coils 11 of each phase while the motor 10 is stationary, depending on the electrical angle $\theta$ of the motor 10, the phase-current in one phase may become zero or close to zero (i.e., current imbalance occurs between phases), potentially causing an excessively large difference in heat generation between phases. In this regard, the control device 40 performs current control such that, when the motor 10 is stationary, the phase-current in each phase is all above the predetermined threshold. This suppresses current flowing predominantly in any one phase and prevents the difference in heat generation between phases from becoming excessively large.

The control device 40 sets an AC d-axis current as the d-axis current command value to flow AC phase-currents that vary in both positive and negative directions through the coils 11 of each phase when it determines that where is the heat generation request in the motor system and the motor 10 is stationary. This causes phase-currents to flow in all phases based on the phase-current command values set for each phase according to the AC d-axis current. Consequently, switching control is performed for both the upper arm switch 21 and the lower arm switch 22 in all phases in the inverter 20. Therefore, heat generation is performed through switching operations in all phases, enabling an increase in caloric value of heat generation in the inverter 20 compared to when heat generation is performed only through switching operations in some phases. Furthermore, when heat generation is performed only in some phases by switching control, the heat generation operation may be limited due to overheating of some switches 21. This method suppresses such problems. Consequently, efficient heat generation is achieved in the motor system.

The control device 40 sets the phase-current command values for each phase based on the command angle $\alpha$ (the electrical angle $\theta$ of motor 10) and the DC d-axis current command value (the d-axis current command value) when there is the heat generation request and the motor 10 is stationary. The control device 40 then controls the phase-current using these phase-current command values. The control device 40 continues to set the phase-current command values for each phase based on the command angle $\alpha$ and the AC d-axis current, controlling the phase-currents using these command values. As a result, the control device 40 can perform the heat generation operation by flowing AC d-axis current while fixing the electrical angle $\theta$ of the motor 10 to control device 40's recognized angle (command angle $\alpha$). This suppresses the undesirable effect where the motor 10 rotates unintentionally during the heat generation operation due to detection errors of the rotation angle sensor 12 caused by d-axis energization.

The control device 40 sets the absolute value of the DC d-axis current to be greater than the absolute value of the AC d-axis current when performing the alignment control using the DC d-axis current. This enables proper execution of the alignment control performed prior to the heat generation operation using the AC d-axis current.

The control device 40 sets the command angle $\alpha$ as the electrical angle $\theta$ at which the phase-currents of all phases of coils 11 reach or exceed the predetermined threshold during the DC d-axis current alignment control. This suppresses current flowing predominantly in one phase during the heat generation operation by the d-axis energization following the alignment control, thereby preventing excessive differences in heat generation between phases.

In the DC d-axis current alignment control, switching occurs in some phases, raising concerns about phase-to-phase variations in heat generation when performing the switching-loss increasing operation. Therefore, the control device 40 does not perform the switching-loss increasing operation during the DC d-axis current alignment control but performs the switching-loss increasing operation during the heat generation operation with AC d-axis current. This suppresses excessive temperature differences across phase switches during alignment control execution.

(Second Embodiment)

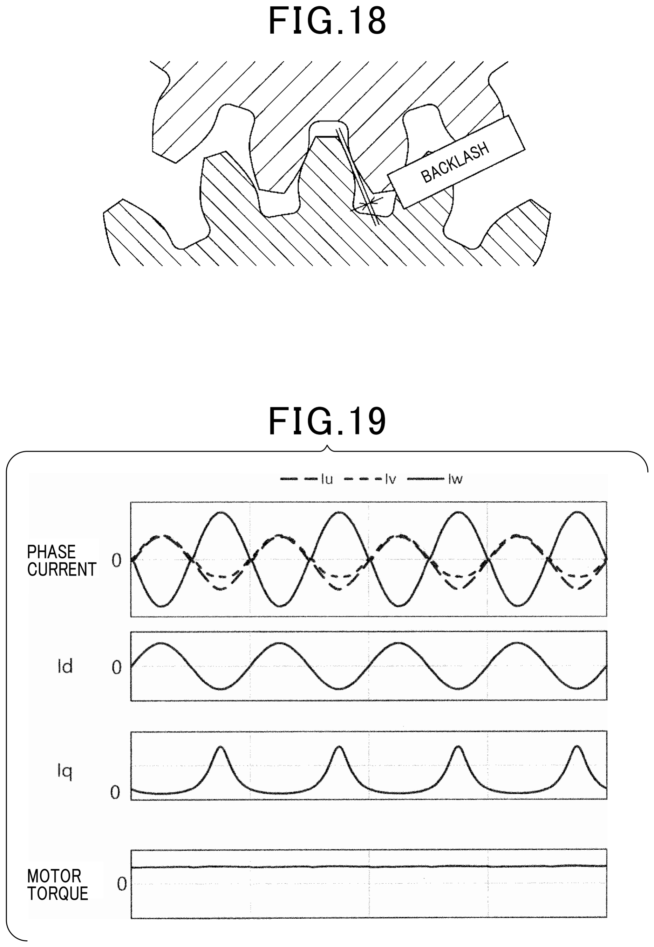

The motor system shown in Figure 1 has a configuration where the rotation of motor 10's rotor is transmitted to the axle 52 via the gear mechanism 51. The rotation of the motor 10's rotor is transmitted to the axle side through the meshing of a gear in the gear mechanism 51. As shown in Figure 18, the gear meshing includes a gap called backlash to achieve smooth rotation. Within the backlash range, the resistance against the motor 10's rotor is small, allowing the gears to rotate with minimal torque, which generates gear noise. Therefore, when the heat generation operation is performed by the d-axis energization when the motor 10 is stationary, there is concern that a continuous gear noise will occur in the gear mechanism 51 if minute torque alternately arises in both positive and negative directions.

Therefore, in this embodiment, the control device 40 performs the current control such that, during the heat generation operation by the d-axis energization, torque is generated in one direction of motor 10's rotation, and the absolute value of this torque does not exceed a predetermined value. The control device 40 may generate alternating current for each phase by the d-axis current and control torque by the q-axis current. Specifically, during the dq/UVW conversion, the control device 40 sets the d-axis current command value Id* to Asinφ and calculates the q-axis current command value Iq* using the following Equation (2). Then, based on these d-axis current command values Id* and q-axis current command values Iq*, the control device 40 calculates the phase-current command values Iu*, Iv*, and Iw*.
[Math 2]

$$I_q = \frac{T_{offset}}{P_N(\phi + (L_q - L_d)I_d)} \quad (2)$$

In Equation (2), Toffset is the torque offset value at zero reference in the motor 10, PN is the number of pole pairs in the motor 10, Lq is the q-axis inductance, and Ld is the d-axis inductance.

Figure 19 is a time chart showing parameter changes when generating the q-axis torque in the heat generation operation by the d-axis energization. In Figure 19, phase-currents flow as shown for each phase in accordance with the set d-axis and q-axis currents. In this case, torque is continuously generated for the motor 10 without crossing zero. This causes each gear tooth in the gear mechanism 51 to be held in a state where it is in mesh on one side of the rotation direction, suppressing the generation of gear noise.

Furthermore, when performing the alignment control, it is advantageous for the control device 40 to set the command angle α to the electrical angle at which each gear tooth in the gear mechanism 51 contacts with counterparty. Specifically, when performing the alignment control using the DC d-axis current, the control device 40 changes the command angle α step by step by predetermined angles to execute the alignment control. The control device 40 may determine whether the modified command angle α is the electrical angle at which each gear tooth in the gear mechanism 51 contacts with counterparty based on whether the detected angle of the rotation angle sensor 12 has followed the angular difference between the pre- and post-modification command angles α. When the detected angle of the rotation angle sensor 12 follows the angular difference between the command angle α before and after the change, the control device 40 determines that each gear tooth in the gear mechanism 51 does not contact with counterparty and changes the command angle α again. Furthermore, when the detected angle of the rotation angle sensor 12 does not follow the angular difference between the command angle α before and after the change, the control device 40 determines that each gear tooth in the gear mechanism 51 contacts with counterparty and sets the command angle α to the electrical angle θ aligned by the alignment control.

It is also possible that the command angle α, set to the electrical angle at which each gear tooth in the gear mechanism 51 contacts with counterparty, is out of the predetermined range Ra where the current values of each phase are above a predetermined threshold. In that case, the control device 40 may generate torque in the reverse rotation direction of the motor 10 to cause each gear tooth in the gear mechanism 51 contacts with counterparty.

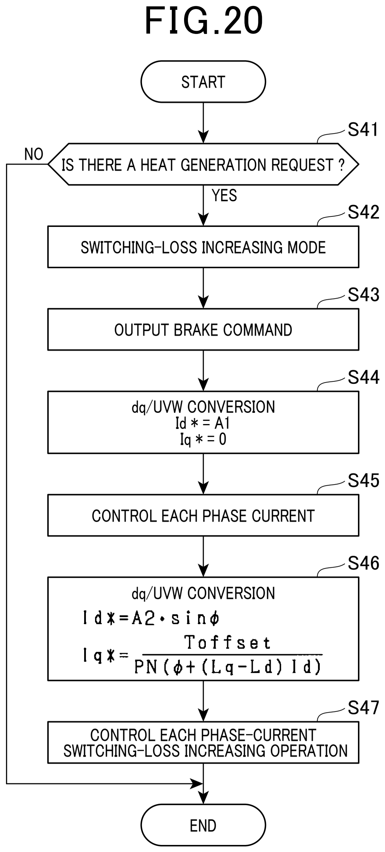

Figure 20 is a flowchart showing the procedure for the heat generation operation when the vehicle is stationary.

In step S41, the control device 40 determines whether there is a heat generation request. For example, when the heat generation request is received from the higher-level control device, the control device determines that there is the heat generation request. When it is determined that there is the heat generation request, the process proceeds to step S42. When it is determined that there is no heat generation request, the process terminates.

In step S42, the control device 40 sets the control mode of inverter 20 to switching-loss increase mode. This ensures that switching-loss increasing operation is appropriately started by the switching control of inverter 20 when the vehicle is stationary.

In step S43, the control device 40 outputs a brake command to prevent wheel rotation in the vehicle. In the vehicle, an electric parking brake, for example, may be activated in response to the brake command.

Subsequently, in steps S44 and S45, while performing processing to set the command angle α of the motor 10 to the electrical angle at which each gear tooth in the gear mechanism 51 contacts with counterparty, the alignment control is performed to adjust the electrical angle of the motor 10 to the command angle $\alpha$ using the DC d-axis current.

Specifically, in step S44, the control device 40 sets the d-axis current command value Id* to A1, the q-axis current command value Iq* to 0, and the electrical angle $\theta$ to the command angle $\alpha$, then calculates the phase-current command values Iu*, Iv*, and Iw* by the dq/UVW transformation. In the subsequent step S45, the control device 40 performs switching control of the upper arm switch 21 and the lower arm switch 22 for each phase based on the phase-current command values Iu*, Iv*, Iw* calculated in step S44, thereby controlling the phase-currents flowing through the coils 11 of each phase. The control device 40 appropriately changes the command angle $\alpha$. When the detected angle of the rotation angle sensor 12 is not following the change in the alignment control, the control device 40 determines that the changed command angle $\alpha$ is the electrical angle at which each gear tooth in the gear mechanism 51 contacts with counterparty.

In other words, according to steps S44 and S45, the command angle $\alpha$ is set to the electrical angle at which each gear tooth in the gear mechanism 51 contacts with counterparty. Based on this command angle $\alpha$, the phase-current command values Iu*, Iv*, and Iw* for each phase are set. The phase-currents are then controlled based on these phase-current command values Iu*, Iv*, and Iw*.

Subsequently, in steps S46 and S47, the control device 40 sets the AC d-axis current as the d-axis current command value Id* and performs the heat generation operation by the AC d-axis current. Specifically, in step S46, the control device 40 sets the d-axis current command value Id* to A2·sin$\varphi$ and sets the q-axis current command value Iq* to the value calculated based on Equation (2). Based on the d-axis current command value Id* and the q-axis current command value Iq*, and the command angle $\alpha$ (i.e., the command angle $\alpha$ set to the electrical angle at which each gear tooth in the gear mechanism 51 contacts with counterparty), the control device 40 calculates the phase-current command values Iu*, Iv*, and Iw* using the dq/UVW transformation.

In the subsequent step S47, the control device 40 performs switching control of the upper arm switch 21 and the lower arm switch 22 for each phase based on the phase-current command values Iu*, Iv*, and Iw* calculated in step S46, thereby controlling the phase-currents flowing through the coils 11 of each phase. At this time, the control device 40 also performs the switching-loss increasing operation. The switching-loss increasing operation may be the same operation as step S21 in Figure 15. Briefly, the following processes are performed as appropriate.

- The control device 40 switches the respective gate resistance of the upper arm switch 21 and the lower arm switch 22 in the drive circuit 24 to the gate resistance for loss increase, thereby prolonging the transition time during switch on and off.
- The control device 40 sets the turn-off time longer than the turn-on time for each of the upper arm switch 21 and the lower arm switch 22.
- The control device 40 performs switching only on the upper arm switch 21, where an increase in switching is expected and does not perform switching on the lower arm switch 22.

According to steps S46 and S47, torque is generated on one side of the rotation direction of the motor 10, and the phase-current of each phase is controlled while ensuring this torque does not exceed the predetermined value.

According to the second embodiment described above, in addition to the effects of the first embodiment, the following effects can be achieved.

In a configuration where the rotation of the motor 10's rotor is transmitted to the gear mechanism 51, during the current control performed while the vehicle is stationary (the motor 10's rotation is stationary), the rotor may rotate in either direction with a slight torque, potentially causing gear mesh noise. Therefore, the control device 40 performs the current control such that torque in one direction of the motor 10 rotation is generated and the absolute value of this torque does not exceed the predetermined value. As a result, it is possible to suppress both the occurrence of rotation of the rotor in the motor 10 and the fluctuation of motor 10 torque across zero in both positive and negative directions. This suppresses the continuous generation of gear noise in the gear mechanism 51. In other words, by causing tooth engagement in a specific direction in the gear mechanism 51, it is possible to suppress tooth noise arising in the gear mechanism 51 due to minute torque alternately occurring in both positive and negative directions.

The control device 40 activates a brake that suppresses vehicle movement when generating a minute torque in motor 10 while the motor is stationary. This suppresses the inconvenience of the vehicle moving unintentionally.

The control device 40 sets the command angle $\alpha$ as the electrical angle at which the gear tooth contact occurs in the gear mechanism 51 during the alignment control using the DC d-axis current. Based on this command angle $\alpha$, the control device 40 sets the phase-current command values Iu*, Iv*, and Iw* for each phase. This allows the gear in gear mechanism 51 to be pressed against in a specific direction, suppressing the generation of gear noise.

(Other Embodiments)

The above embodiment may be modified, for example, as follows.

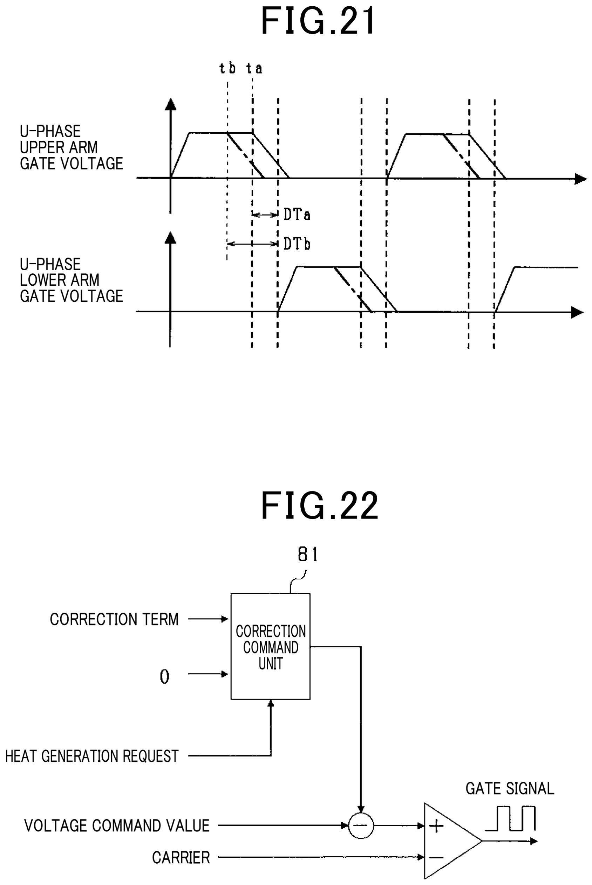

When the control device 40 extends the turn-off times of the upper arm switch 21 and the lower arm switch 22 in the switching-loss increasing operation, the dead time may be longer than when the normal operation is performed. For example, as shown by the solid line in Figure 21, when the turn-off time is longer than the normal, the timing at which the upper arm switch 21 and the lower arm switch 22 respectively reach a substantially off state is delayed, raising concerns about short circuits may occur in the upper and lower arms. In contrast, as shown by the dotted line in Figure 21, the timing for turning off the gate signal is advanced, changing from ta to tb. In this case, advancing the gate signal off timing suppresses occurrence of short circuits between the upper and lower arms even when the turn-off time is prolonged. In Figure 21, while the dead time during normal operation is DTa, the dead time when switching-loss increases is DTb.

The control device 40 may perform feed forward control that lowers the voltage command value for each phase in advance by a voltage equivalent to the turn-off delay when extending the turn-off time as switching-loss increasing operation. For example, as shown in Figure 22, the control device 40 may include a correction command unit 81. When there is the heat generation request, the control device 40 may reduce the voltage command values for each phase using a feed forward correction term. This allows for an appropriate increase in dead time when switching-loss increases.

Extending the dead time when it is determined that there is the heat generation request, compared to when it is determined that there is no heat generation request, suppresses occurrence of short-circuit between the upper and lower arms, even if the switch turn-off time is prolonged due to increased switching-loss.

In the above first embodiment, in the heat generation operation of Figure 15, the control device 40 was configured not to perform the switching-loss increasing operation when flowing the DC d-axis current during the alignment control (steps S17, S18). This can be modified such that the control device 40 performs the switching-loss increasing operation when flowing the DC d-axis current during the alignment control (steps S17, S18).

In the above embodiments, in the inverter 20 at least one of the turn-on time and turn-off time of the upper arm switch 21 and the lower arm switch 22 is variable, and the control device 40 performs control to switch the respective gate resistance of the upper arm switch 21 and the lower arm switch 22, but this is not limited to this. For example, the gate applied voltage of the upper arm switch 21 and the lower arm switch 22 may be varied. In this case, when there is the heat generation request the control device 40 sets the gate voltage lower than when the normal operation is performed. This prolongs the time required for gate charging and discharging in semiconductor switching devices, thereby increasing switching-loss.

In the above embodiments, control device 40 was configured to apply a sinusoidal d-axis current as the AC d-axis current during the heat generation operation caused by the d-axis energization. However, the control device 40 may also apply a rectangular wave d-axis current as the AC d-axis current. The AC d-axis current need only alternate between positive and negative polarities at regular intervals.

This disclosure may also be applied to other mobile objects besides electric vehicles, such as aircraft or ships. It may also be applied to stationary systems.

The control unit and its method described herein may be implemented by a dedicated computer provided by configuring a processor and memory programmed to execute one or more functions embodied by a computer program. Alternatively, the control unit and its method described herein may be implemented by a dedicated computer provided by configuring a processor using one or more dedicated hardware logic circuits. Alternatively, the control unit and its method described herein may be implemented by one or more dedicated computers configured by a combination of a processor and memory programmed to execute one or more functions, and one or more hardware logic circuits. Furthermore, the computer program may be stored on a computer-readable, non-transitory tangible medium as instructions executable by a computer.

The technical features extracted from the above embodiments are described below.

[Configuration 1]

A control device (40) configured to control each of a plurality of switches in an inverter, the control device being applied to a motor system, the motor system including: a motor (10) having polyphase windings (11); and an inverter (20) that adjusts a phase-current in a winding of each phase by turning on and off a plurality of switches (21, 22), each of the switches being a semiconductor switching device,
wherein the control device includes:

a determination unit configured to determine whether there is a heat generation request in the motor system; and
a switch control unit configured to turn on and off the plurality of switches respectively,
wherein when it is determined that there is the heat generation request, the switch control unit causes at least one of:
(1) a transition time for turning on each of the plurality of switches; and (2) a transition time for turning off each of the plurality of switches, to be longer than when it is determined that there is no heat generation request.

[Configuration 2]

The control device according to configuration 1, wherein
when it is determined that there is the heat generation request, the switch control unit generates larger switching-loss when turning off each of the plurality of switches than when turning on each of the plurality of switches.

[Configuration 3]

The control device according to configurations 1 or 2, wherein
when it is determined that there is the heat generation request, the switch control unit causes the transition time for turning on each of the plurality of switches to be same as when it is determined that there is no heat generation request, and causes the transition time for turning off each of the plurality of switches to be longer than when it is determined that there is no heat generation request.

[Configuration 4]

The control device according to any one of configurations 1 to 3, wherein

the plurality of switches of the inverter includes an upper arm switch (21) and a lower arm switch (22), that are series-connected, for each phase,
the inverter includes a diode (23) connected in reverse parallel to each of the plurality of switches, and
the switch control unit, when turning on the upper arm switch of any phase to flow phase-current through the windings and subsequently turning off the upper arm switch of the any phase to return the phase current, maintains the lower arm switch of the same phase as the upper arm switch of the any phase in the off-state and causes the phase-current to return through the diode connected in reverse parallel to the lower arm switch of the same phase as the upper arm switch of the any phase.

[Configuration 5]

The control device according to any one of configurations 1 to 3, wherein

the plurality of switches of the inverter includes an upper arm switch (21) and a lower arm switch (22), that are series-connected, for each phase,
the upper arm switch and the lower arm switch are configured to be alternately turned on and off with a dead time in between, and
when it is determined that there is the heat generation request, the switch control unit extends the dead time to be longer than when it is determined that there is no heat generation request.

[Configuration 6]

The control device according to any one of configurations 1 to 5, wherein

the control device controls turning on and off the plurality of switches using a PWM pulse, and
when the PWM pulse is shorter than a predetermined time,

the switch control unit does not generate the larger switching-loss.

[Configuration 7]

The control device according to any one of configurations 1 to 6, wherein

further including an acquiring unit configured to acquire a temperature of the plurality of switches,
wherein the switch control unit sets a switching-loss increasing period for extending the transition time based on the temperature of the plurality of switches.

[Configuration 8]

The control device according to any one of configurations 1 to 7,

further including a current control unit configured to perform a current control such that alternating phase-currents flow in both positive and negative directions through the windings of each phase,

wherein, while the current control is performed, when it is determined that there is the heat generation request, the switch control unit causes the at least one of: (1) a transition time for turning on each of the plurality of switches; and (2) a transition time for turning off each of the plurality of switches to be longer than when it is determined that there is no heat generation request.

[Configuration 9]

The control device according to configuration 8,

the current control unit performs the current control such that alternating phase-currents flow in both positive and negative directions through the windings of each phase, in a state where only a d-axis current flows among the d-axis current and a q-axis current.

[Configuration 10]

The control device according to configurations 8 or 9,

wherein the switch control unit sets a switching-loss increasing period for extending the transition time based on the phase-currents flowing through the windings of each phase.

[Configuration 11]

The control device according to configuration 8,

wherein the rotation of the motor is transmitted to a gear mechanism (51), and
the current control unit performs the current control to generate a torque in one rotational direction of the motor such that the absolute value of the torque does not exceed a predetermined value.

[Configuration 12]

The control device according to configuration 11,

wherein the motor is provided in a mobile object as a power source for the traveling of the mobile object, and
the control device further includes a brake instruction unit that causes a break device of the mobile object to operate to suppress traveling of the mobile object when the torque in one rotational direction of the motor is generated by the current control unit.

[Configuration 13]

The control device according to any one of configurations 1 to 12, wherein
wherein the current control unit performs the current control such that the phase-currents flow through the windings of all phases are equal to or greater than a predetermined threshold, when the motor is stationary.

Although the present disclosure has been described in accordance with the embodiments, the present disclosure is not limited to these embodiments or structures. The present disclosure also encompasses various embodiments and modifications within the scope of equivalents. Furthermore, various combinations and forms, as well as other combinations and forms containing only one element, more than one element, or fewer than one element, also fall within the scope and spirit of the present disclosure.

## Claims

1. A control device (40) configured to control each of a plurality of switches in an inverter, the control device being applied to a motor system, the motor system comprising: a motor (10) having polyphase windings (11); and an inverter (20) that adjusts a phase-current in a winding of each phase by turning on and off a plurality of switches (21, 22), each of the switches being a semiconductor switching device,
wherein the control device comprises:

a determination unit configured to determine whether there is a heat generation request in the motor system; and

a switch control unit configured to turn on and off the plurality of switches respectively,

wherein when it is determined that there is the heat generation request, the switch control unit causes at least one of: (1) a transition time for turning on each of the plurality of switches; and (2) a transition time for turning off each of the plurality of switches, to be longer than when it is determined that there is no heat generation request.

2. The control device according to claim 1, wherein
when it is determined that there is the heat generation request, the switch control unit generates larger switching-loss when turning off each of the plurality of switches than when turning on each of the plurality of switches.

3. The control device according to claim 1, wherein
when it is determined that there is the heat generation request, the switch control unit causes the transition time for turning on each of the plurality of switches to be same as when it is determined that there is no heat generation request, and causes the transition time for turning off each of the plurality of switches to be longer than when it is determined that there is no heat generation request.

4. The control device according to claim 1, wherein

the plurality of switches of the inverter comprises an upper arm switch (21) and a lower arm switch (22), that are series-connected, for each phase,

the inverter comprises a diode (23) connected in reverse parallel to each of the plurality of switches, and

the switch control unit, when turning on the upper arm switch of any phase to flow phase-current through the windings and subsequently turning off the upper arm switch of the any phase to return the phase current, maintains the lower arm switch of the same phase as the upper arm switch of the any phase in the off-state and causes the phase-current to return through the diode connected in reverse parallel to the lower arm switch of the same phase as the upper arm switch of the any phase.

5. The control device according to claim 1, wherein

the plurality of switches of the inverter comprises an upper arm switch (21) and a lower arm switch (22), that are series-connected, for each phase,

the upper arm switch and the lower arm switch are configured to be alternately turned on and off with a dead time in between, and

when it is determined that there is the heat generation request, the switch control unit extends the dead time to be longer than when it is determined that there is no heat generation request.

6. The control device according to claim 2, wherein

the control device controls turning on and off the plurality of switches using a PWM pulse, and

when the PWM pulse is shorter than a predetermined time, the switch control unit does not generate the larger switching-loss.

7. The control device according to claim 1,

further comprising an acquiring unit configured to acquire a temperature of the plurality of switches,

wherein the switch control unit sets a switching-loss increasing period for extending the transition time based on the temperature of the plurality of switches.

8. The control device according to any one of claims 1 to 7,

further comprising a current control unit configured to perform a current control such that alternating phase-currents flow in both positive and negative directions through the windings of each phase,

wherein, while the current control is performed, when it is determined that there is the heat generation request, the switch control unit causes the at least one of: (1) a transition time for turning on each of the plurality of switches; and (2) a transition time for turning off each of the plurality of switches to be longer than when it is determined that there is no heat generation request.

9. The control device according to claim 8,

the current control unit performs the current control such that alternating phase-currents flow in both positive and negative directions through the windings of each phase, in a state where only a d-axis current flows among the d-axis current and a q-axis current.

10. The control device according to claim 8,
wherein the switch control unit sets a switching-loss increasing period for extending the transition time based on the phase-currents flowing through the windings of each phase.

11. The control device according to claim 8,

wherein the rotation of the motor is transmitted to a gear mechanism (51), and
the current control unit performs the current control to generate a torque in one rotational direction of the motor such that the absolute value of the torque does not exceed a predetermined value.

12. The control device according to claim 11,

wherein the motor is provided in a mobile object as a power source for the traveling of the mobile object, and
the control device further comprises a brake instruction unit that causes a break device of the mobile object to operate to suppress traveling of the mobile object when the torque in one rotational direction of the motor is generated by the current control unit.

13. The control device according to claim 8,
wherein the current control unit performs the current control such that the phase-currents flow through the windings of all phases are equal to or greater than a predetermined threshold, when the motor is stationary.

14. A control program configured to be executed by a control device (40) configured to control each of a plurality of switches in an inverter, the control device being applied to a motor system, the motor system comprising: a motor (10) having a polyphase windings (11); and an inverter (20) that adjusts a phase-current in a winding of each phase by turning on and off a plurality of switches (21, 22), each of the switches being a semiconductor switching device, wherein the control program is configured to cause the control device to perform:

a determination process to determine whether there is a heat generation request in the motor system; and
a switch control process to turn on and off the plurality of switches respectively,
wherein the switch control process includes, when it is determined that there is the heat generation request, causing at least one of: (1) a transition time for turning on each of the plurality of switches; and (2) a transition time for turning off each of the plurality of switches, to be longer than when it is determined that there is no heat generation request.

# FIG.1

EP 4 716 093 A1

CONTROL DEVICE

# FIG.2

# FIG.3A

# FIG.3B

# FIG.3C

# FIG.4

SWITCHING-LOSS
INCREASING PERIOD

IGNITION POINT

DEVICE TEMPERATURE

NORMAL PERIOD

SHORT-CIRCUIT
DETECTION TIME

TIME

# FIG.5

$I_d^* = A sin\phi$ ⟶

$I_q^* = 0$ ⟶

ELECTRICAL ANGLE $\theta$ ⟶

71

dq

uvw

⟶ $I_u^*$

⟶ $I_v^*$

⟶ $I_w^*$

# FIG.6

dq-AXIS
CURRENT

0

d-AXIS    q-AXIS

PHASE-
CURRENT

0

U-PHASE  V-PHASE  W-PHASE

# FIG.7A

# FIG.7B

# FIG.8A

# FIG.8B

EP 4 716 093 A1

FIG.9A
U-PHASE UPPER ARM GATE VOLTAGE
U-PHASE LOWER ARM GATE VOLTAGE

FIG.9B
U-PHASE UPPER ARM GATE VOLTAGE
U-PHASE LOWER ARM GATE VOLTAGE
X

FIG.9C
U-PHASE UPPER ARM GATE VOLTAGE
U-PHASE LOWER ARM GATE VOLTAGE

# FIG.10

# FIG.11

# FIG.12

# FIG.13A

ALIGNMENT CONTROL

~71A

$I_d^* = A1 \rightarrow$

$I_q^* = 0 \rightarrow$

COMMAND ANGLE $\alpha \rightarrow$

dq / uvw

$\rightarrow I_u^*$

$\rightarrow I_v^*$

$\rightarrow I_w^*$

# FIG.13B

HEAT GENERATION OPERATION

~71B

$I_d^* = A2 \cdot sin\phi \rightarrow$

$I_q^* = 0 \rightarrow$

COMMAND ANGLE $\alpha \rightarrow$

dq / uvw

$\rightarrow I_u^*$

$\rightarrow I_v^*$

$\rightarrow I_w^*$

# FIG.14

# FIG.15

```
                    START
                       │
                       ▼                    ─S11
NO    ┌──────────────────────────────┐
◄─────┤   IS THERE A HEAT            │
      │   GENERATION REQUEST ?       │
      └──────────────────────────────┘
                       │ YES          ─S12
                       ▼
            ┌────────────────────┐
            │  SWITCHING-LOSS    │
            │  INCREASE MODE     │
            └────────────────────┘
                       │              ─S13
                       ▼
            ┌────────────────────┐
            │   ACQUIRE θa       │
            └────────────────────┘
                       │              ─S14
                       ▼
      ┌──────────────────────────┐  NO
      │  WITHIN PREDETERMINED    ├─────────────┐
      │  RANGE Ra ?              │             │
      └──────────────────────────┘             │
                       │ YES   ─S15            ▼        ─S16
                       ▼                ┌────────────────────┐
            ┌────────────────────┐      │      SET α         │
            │     α ← θa         │      └────────────────────┘
            └────────────────────┘             │
                       │◄─────────────────────┘
                       ▼              ─S17
            ┌────────────────────┐
            │  dq/UVW CONVERSION │
            │  Id * = A1         │
            │  Iq * = 0          │
            └────────────────────┘
                       │              ─S18
                       ▼
            ┌────────────────────┐
            │  CONTROL EACH      │
            │  PHASE-CURRENT     │
            └────────────────────┘
                       │              ─S19
                       ▼
            ┌────────────────────┐
            │  dq/UVW CONVERSION │
            │  Id * = A2·sinφ    │
            │  Iq * = 0          │
            └────────────────────┘
                       │              ─S20
                       ▼
            ┌────────────────────┐
            │  SET SWITCHING-LOSS│
            │  INCREASING PERIOD │
            └────────────────────┘
                       │              ─S21
                       ▼
            ┌────────────────────┐
            │  CONTROL EACH      │
            │  PHASE-CURRENT     │
            │  SWITCHING-LOSS    │
            │  INCREASING        │
            │  OPERATION         │
            └────────────────────┘
                       │
                       ▼
                     END
```

# FIG.16

START

S31
IS THERE A HEAT GENERATION REQUEST ?

— NO →

— YES →

S34
SWITCH-ON TIME > TH ?

— NO →

— YES →

S35
SWITCHING-LOSS INCREASING MODE

S36
AQUIRE DEVICE TEMPERATURE

S37
SET SWITCHING-LOSS INCREASING PERIOD

S38
SWITCHING CONTROL

S32
NORMAL MODE

S33
SWITCHING CONTROL

END

# FIG.17

(LONG) ↑

SWITCHING-LOSS INCREASING PERIOD

DEVICE TEMPERATURE (HIGH) →

# FIG.18

# FIG.19

# FIG.20

START

S41

IS THERE A HEAT GENERATION REQUEST ?

NO

YES

S42

SWITCHING-LOSS INCREASING MODE

S43

OUTPUT BRAKE COMMAND

S44

dq/UVW CONVERSION
Id ∗ = A1
Iq ∗ = 0

S45

CONTROL EACH PHASE CURRENT

S46

dq/UVW CONVERSION

$$Id* = A2 \cdot \sin\phi$$

$$Iq* = \frac{Toffset}{PN(\phi + (Lq - Ld)Id)}$$

S47

CONTROL EACH PHASE-CURRENT
SWITCHING-LOSS INCREASING OPERATION

END

# FIG.21

U-PHASE
UPPER ARM
GATE VOLTAGE

tb  ta

DTa
DTb

U-PHASE
LOWER ARM
GATE VOLTAGE

# FIG.22

81

CORRECTION TERM →

CORRECTION
COMMAND
UNIT

0 →

HEAT GENERATION REQUEST →

GATE SIGNAL

VOLTAGE COMMAND VALUE →

CARRIER →

35

## INTERNATIONAL SEARCH REPORT

| | International application No. |
|---|---|
| | **PCT/JP2024/015930** |

### A. CLASSIFICATION OF SUBJECT MATTER

*H02P 27/06*(2006.01)i; *H02P 29/60*(2016.01)i
FI: H02P27/06; H02P29/60

According to International Patent Classification (IPC) or to both national classification and IPC

### B. FIELDS SEARCHED

Minimum documentation searched (classification system followed by classification symbols)

H02P27/06; H02P29/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-5843 A (HITACHI AUTOMOTIVE SYSTEMS, LTD.) 05 January 2017 (2017-01-05)<br>paragraphs [0001]-[0050], fig. 1-7 | 1-14 |
| A | JP 2021-97545 A (HITACHI INDUSTRIAL EQUIPMENT SYSTEMS CO., LTD.) 24 June 2021 (2021-06-24)<br>paragraph [0021] | 1-14 |
| A | JP 2021-13226 A (SOKEN, INC.) 04 February 2021 (2021-02-04)<br>paragraphs [0001]-[0129], fig. 1-17 | 1-14 |
| A | JP 2005-348510 A (TOYOTA JIDOSHA KABUSHIKI KAISHA) 15 December 2005 (2005-12-15)<br>paragraphs [0001]-[0271], fig. 1-16 | 1-14 |

☐ Further documents are listed in the continuation of Box C.       ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/015930**

| Patent document cited in search report | | | Publication date (day/month/year) | Patent family member(s) | Publication date (day/month/year) |
|---|---|---|---|---|---|
| JP | 2017-5843 | A | 05 January 2017 | (Family: none) | |
| JP | 2021-97545 | A | 24 June 2021 | (Family: none) | |
| JP | 2021-13226 | A | 04 February 2021 | (Family: none) | |
| JP | 2005-348510 | A | 15 December 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023080088 A

- JP 5849917 B